# EUROPEAN PATENT SPECIFICATION

(11) **EP 2 079 195 B1**
(45) Date of publication and mention of the grant of the patent: **27.08.2014**
(21) Application number: 07831154.5
(22) Date of filing: 02.11.2007
(51) Int. Cl.: H04L 12/437

(54) **PACKET RING NETWORK SYSTEM, PACKET TRANSFER METHOD AND INTERLINK NODE**
PAKETRINGNETZWERKSYSTEM, PAKETTRANSFERVERFAHREN UND INTERLINK-KNOTEN
SYSTÈME DE RÉSEAU EN ANNEAU POUR PAQUETS, PROCÉDÉ DE TRANSFERT DE PAQUETS ET N UD D'INTERCONNEXION

(30) Priority: 02.11.2006 JP 2006298422
(43) Date of publication of application: 15.07.2009
(73) Proprietor: NEC Corporation, Minato-ku Tokyo 108-8001 (JP)
(72) Inventor: SAKAUCHI, Masahiro, Minato-ku Tokyo 108-8001 (JP)
(74) Representative: Vossius & Partner
(86) International application number: PCT/JP2007/071420
(87) International publication number: WO 2008/053995

(56) References cited:
- WO-A1-2004/095779
- WO-A1-2006/092915
- CA-A1- 2 599 326
- US-A1- 2005 226 265
- MATSUMOTO T. ET AL: 'Analysis of the Effect of Supplementing a Shortcut Link to Rings Networks (Network)' IEICE TRANSACTIONS ON COMMUNICATIONS vol. E86-B, no. 5, 01 May 2003, pages 1641 - 1652, XP003019910

## Description

### Technical Field

The present invention relates to a packet ring network system, a packet forwarding method, and an interlink node which divide a packet ring and integrate a plurality of packet rings.

### Background Art

As a packet ring network system, RPR (Resilient Packet Ring) standardized in IEEE 802.17 is known. RPR is a MAC layer protocol providing access to a ring-like transmission medium, and provides carrier class high-speed failure recovery, effective utilization of a network band, shortest path forwarding, etc.

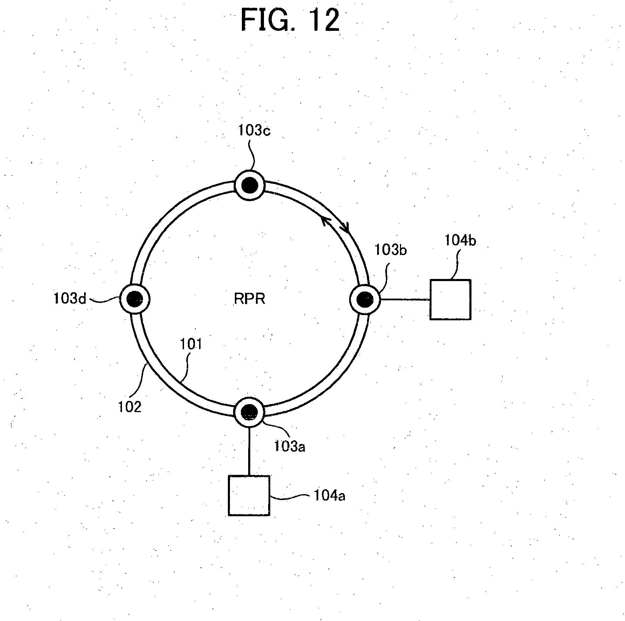

Fig, 12 is a diagram illustrating a configuration example of an RPR network disclosed in Patent Literature 1. As shown in Fig. 12, a packet ring included in the RPR network has two ringlets 101 and 102 which forward a packet in mutually opposite directions. A plurality of nodes is connected to the packet ring. In the example shown in Fig. 12, four nodes 103a, 103b, 103c, and 103d are connected to the packet ring. An RPR MAC address is allocated to each of the nodes. The nodes mutually exchange a control packet, collect information such as hop counts between nodes, and obtain topology information of the network.

Furthermore, there is a case that a user terminal is connected to each of the nodes 103a, 103b, 103c, and 103d. In the example shown in Fig. 12, a user terminal 104a is connected to the node 103a and a user terminal 104b is connected to the node 103b.

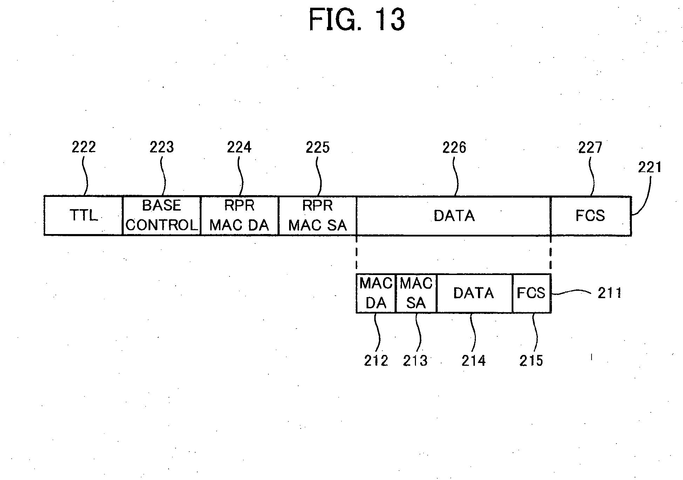

An RPR data packet standardized in IEEE 802.17 will be described below. Fig. 13 shows an RPR packet format. A user terminal transmits a client packet 211 to a node. The client packet 211 includes a destination terminal address (MAC DA) 212 indicating the MAC address of a destination user terminal, a source terminal address (MAC SA) 213 indicating the MAC address of the source user terminal of the client packet, data (DATA) 214, and a frame check sequence (FCS) 215. When a node receives a client packet from a user terminal, the node encapsulates the client packet to generate an RPR data packet 221 and transmits the generated RPR data packet 221 to another node. The client packet 211 is encapsulated and stored as data 226 in the PRR data packet 221.

Furthermore, the RPR packet 221 includes a destination node address (RPR MAC DA) 224 indicating the MAC address of a destination node, a source node address (RPR MAC SA) 225 indicating the MAC address of a source node, a base control field (Base Control) 223, a TTL field (Time To Live) 222, and a FCS 227. The base control field 223 includes information designating a ringlet used for forwarding, and identification information identifying the type of the packet such as a control packet. The TTL field 222 is used for preventing the packet from endlessly rotating on a ring. The details of the RPR data packet format are described in, for example, Non-Patent Literature 1.

The operations of transmitting, receiving, and forwarding an RPR data packet in each of the nodes on the ring will be described below.

First, the operations of the nodes in the case that the RPR data packet is a unicast data packet will be described. A source node sends out the RPR data packet which is a unicast data packet to a ringlet. When receiving the RPR data packet from the ringlet, each of the nodes determines whether the received RPR data packet is a packet addressed to the own node.

Specifically, each of the nodes determines that the received RPR data packet is a packet addressed to the own node when the destination node address 224 included in the received RPR data packet is the same as the RPR MAC address of the own node. Each of the nodes, when determining that the received RPR data packet is a packet addressed to the own node, extracts the RPR data packet from the ringlet and deletes the RPR data packet from the ring. Each of the nodes, when determining that the received RPR data packet is not a packet addressed to the own node, decrements TTL and then sends out again the RPR data packet to the same ringlet as the ringlet from which the node has received the RPR data packet. The source node, when receiving the RPR data packet sent out by itself, deletes the RPR data packet from the ring. Furthermore, each of the nodes deletes the RPR data packet from the ring when TTL becomes zero.

Next, the operations of the nodes in the case that the RPR data packet is a broadcast data packet will be described. A source node sends out the RPR data packet which is a broadcast data packet to a ringlet. Each of the nodes decrements TTL of the received RPR data packet and then forwards it to the next node. The source node of the RPR data packet deletes the RPR data packet from the ring when receiving the RPR data packet transmitted by itself. Furthermore, each of the nodes deletes the RPR packet from the ring when TTL becomes zero.

Next, an RPR control packet (referred to as a control packet hereinafter) standardized in IEEE 802.17 will be described.

In order to enable autonomous operations such as a topology discovery function, a protection function, an OAM (Operation Administration and Maintenance) function, and the like in all nodes belonging to an RPR network , each of the RPR nodes transmits and receives a control packet through a data path.

In IEEE 802.17, a control packet is defined for each of the above functions on an individual basis. The method of forwarding a control packet is similar to the method of forwarding an RPR data packet.

The operations of the nodes 103a and 103b and the user terminals 104a and 104b connected to the nodes 103a and 103b, respectively, in the RPR network shown in Fig. 12 when the user terminal 104a transmits data to the user terminal 104b will be described.

Each of the nodes has an FDB which is a database storing (studying) a source terminal address (MAC SA) 213 and a source node address (RPR MAC SA) 225 in association with each other, which are encapsulated in a received RPR data packet. For this reason, each of the nodes is able to retrieve an RPR MAC address by using the MAC address of a user terminal as a retrieval key.

When the user terminal 104a sends out a client packet (data), the node 103a receives the client packet. The node 103a retrieves the FDB by using the destination terminal address (MAC DA) 212 included in the received client packet as a retrieval key and sets the result in the RPR data packet as a destination node address (RPR MAC DA) 224. Furthermore, the node 103a sets its own MAC address in the RPR data packet as a source node address (RPR MAC SA) 225. Then, the node 103a sets the client packet received from the user terminal 104a in the RPR data packet as data 226. In addition, the node 103a retrieves the topology database to select a ringlet for forwarding data from the source node to the destination node, sets the ringlet in the base control field 223, and also sets a TTL value. The node 103a sends out the RPR data packet in which various data has been set, to the selected ringlet.

Furthermore, the node 103a performs flooding when association between a MAC address of the destination user terminal and an RPR MAC address corresponding to the MAC address has not been established (studied) as a result of retrieving the FDB. A broadcast address is set to the destination node address (RPR MAC DA) 224 of the RPR data packet transmitted by flooding, and the RPR data packet is received by all nodes on the ring. Due to the flooding, the client packet transmitted by the user terminal 104a can be received by the destination user terminals 104b. Usually, in a higher-level layer, the user terminal 104b returns a reply to the user terminal 104a. When returning the reply, the user terminal 104b becomes a source of a client packet, and the user terminal 104a becomes a destination. Furthermore, the node 103b becomes a source of an RPR packet.

When an RPR packet is returned from the user terminal 104b, the node 103a stores (studies) the MAC address of the user terminal 104b and the RPR MAC address of the node 103b in the FDB in association with each other. Thus, when the user terminal 104a transmits a client packet to the user terminal 104b again, the node 103a retrieves the RPR MAC address of the node 103b using the destination terminal address (MAC DA) 212 included in the client packet as a key and comes to be able to perform unicast forwarding by using the result of the retrieval as a destination node address (RPR MAC DA) 224.

Furthermore, methods of flooding a broadcast packet to a ring include a method by which a source node sends out a broadcast packet to any one of the ringlets and a method by which a source node sends out a broadcast packet to both of the ringlets (bidirectional flooding). In bidirectional flooding, a source node sets an arrival point of a broadcast packet for each ringlet in advance to prevent multiple forwarding. An arrival point of a packet which has been set on a ring in advance to prevent multiple forwarding is referred to as a cleave point. In the case of bidirectional flooding, the method of calculating TTL should be changed so that a packet is forwarded to all nodes and a double arrival does not occur according to whether the number of nodes in the ring is an even number or an odd number. However, the method of calculating TTL is omitted because it does not relate to the present invention.

Next, a TP frame will be described. A TP frame is a fixed-length frame and is a control frame for transmitting information such as span protection, edge conditions, and a sequence number of a node to all packet ring nodes except the own node. The number of nodes constituting a packet ring network system is set in TTL, and a TP frame is broadcasted to both of ringlets 0 and 1. Furthermore, each node collects the information of TP frames received from all nodes except the own node and creates a topology database.

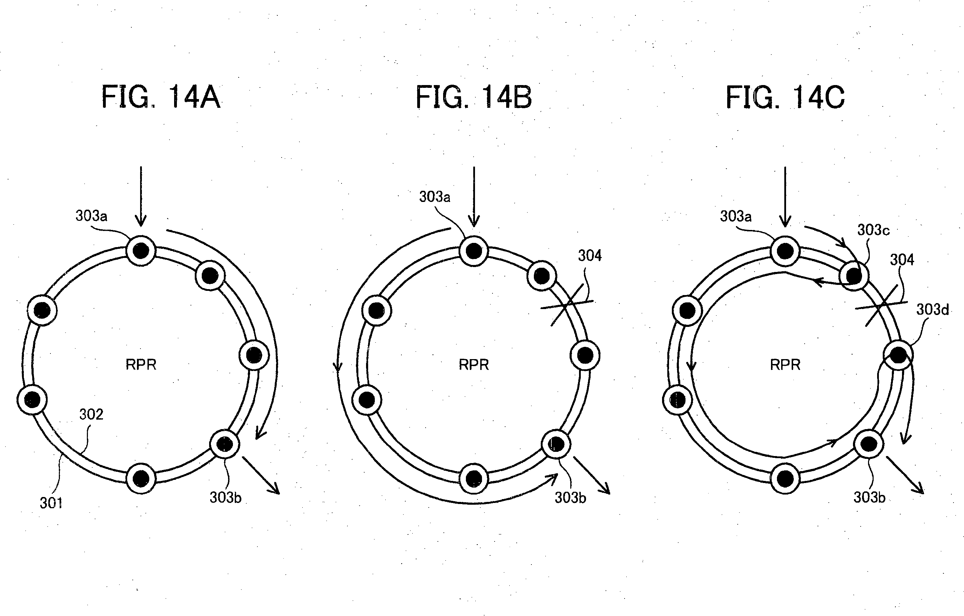

Next, the protection operation of RPR at link failure will be described with reference to Figs. 14A to 14C.

In IEEE 802.17, a steering mode and a lap mode are defined as a protection operation at failure occurrence. The steering mode is defined as an essential function, and the lap mode is defined as an optional function.

Fig. 14A is an explanatory diagram showing a network operation at normal times. Fig. 14A shows the state in which a packet is being forwarded from a node 303a to a node 303b on a ringlet 301.

Fig. 14B is an explanatory diagram showing a steering mode operation. When a failure point 304 occurs as shown in Fig. 14B, all nodes in the ring obtain the positional information of the failure point 304. Specifically, the nodes 303c and 303d connected to the link which has become the failure point 304 notify all other nodes of the positional information of the failure point 304. As a result, each node recognizes the position of the failure point 304. A source node, when transmitting a unicast packet, selects a ringlet which does not include the failure point 304 between the source node and the destination node of the RPR packet to send out the unicast packet.

For example, the node 303a, when transmitting a unicast packet to the node 303b, recognizes the position of the failure point 304, and thereby changing the ringlet for transmitting the unicast packet from the ringlet 301 to the ringlet 302 to forward the packet to the node 303b. Furthermore, the node 303a, when transmitting a broadcast packet, selects both of the ringlets 301 and 302 and sends out the broadcast packet to the ringlets 301 and 302. As a result, the broadcast packet is transmitted to each node in the ring.

Fig. 14C is an explanatory diagram showing the operation of the lap mode. In the lap mode, a source node selects the same ringlet as at normal times and sends out an RPR packet. For example, the node 303a, when transmitting an RPR packet to the node 303b, selects the ringlet 301 as at normal times to transmit the RPR packet. The node 303c, which is connected to the link of the failure point 304 and has detected the failure, when receiving the RPR packet, selects the ringlet 302 which is different from the ringlet 301 through which the packet has been sent and forwards the RPR packet using the ringlet 302. In other words, the node 303c forwards the RPR packet using a ringlet where the failure point 304 does not exist. This packet is forwarded on the ringlet 302 and forwarded to the node 303d which is connected to the link which has become the failure point 304 and has detected the failure. The node 303d also selects a ringlet which is different from the ringlet through which the packet has been sent, and forwards the RPR packet using the selected ringlet. As a result, the destination node 303b receives the RPR packet.

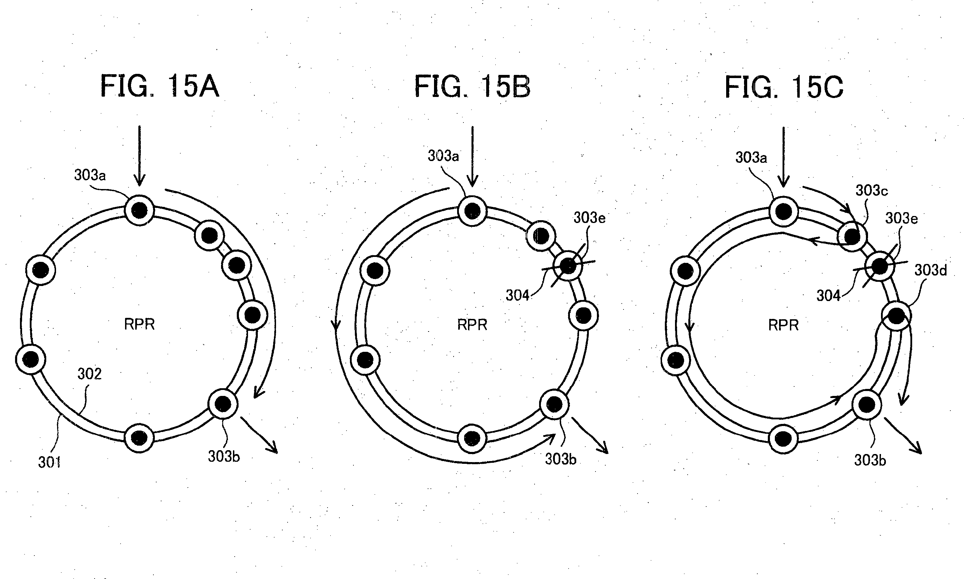

Figs. 15A to 15C are explanatory for illustrating the protection operation of RPR at node failure. Fig. 15A shows a network operation at normal times. Fig. 15B shows the operation of the steering mode when a failure point 304 exists on a node. Fig. 15C shows the operation of the lap mode. A specific operation when a failure point 304 exists on a node is similar to the operation when a failure has occurred on a link as shown in Figs. 14A to 14C.

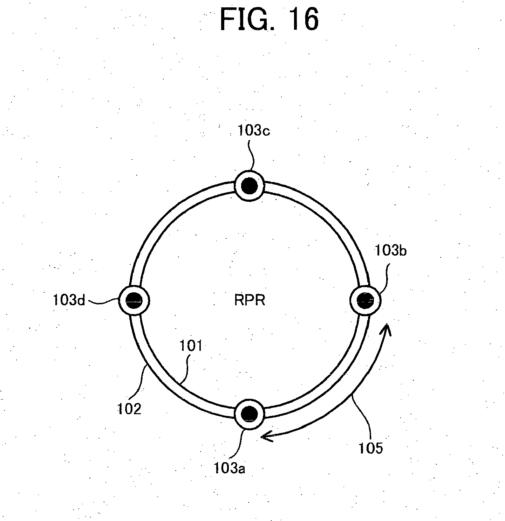

Next, FS (Forced Switch) will be described with reference to Fig. 16. In IEEE 802.17, a protection hierarchy is defined which is referred to as Forced Switch for stopping the operation of a specific span (bidirectional link between adjacent nodes), that is, for stopping the traffic of a packet forwarded in the span. The hierarchy is set according to operations manager's demands. FS corresponds to demands such as in-service node addition or decrease and facility exchange. The operation of an RPR network at FS setting is similar to that when already explained span failure has occurred in an FS targeted span. In other words, traffic forwarding in an FS targeted span is avoided in the steering or lapping mode.

Note that, in this specification, ring division is described, but the description of ring integration is omitted because ring integration can be realized by following the opposite procedure.
Patent Literature 1: Unexamined Japanese Patent Application Kokai Publication No. 2004-242194
Non-Patent Literature 1: IEEE Std 802.17 - 2004 "PART 17: RPR ACCESS METHOD AND PHYSICAL LAYER SPECIFICATION"

In the paper of Matsumoto T. et al, "Analysis of the Effect of Supplementing a Shortcut Link to Rings Networks (Network)", IEICE TRANSACTIONS ON COMMUNICATIONS, vol. E86-B, no. 5, 1 May 2003 (2003-05-01), pages 1641-1652, the number of connecting paths in the links of networks with or without a supplementary link are analyzed, assuming a full-mesh topology, wherein two types of connection were examined, a single-path and a 2-path connection.

CA 2 599 326 A1 describes a packet ring network system, a method for connecting packet rings, and an inter-ring connection node, enabling each of the links connecting rings to perform packet transmission while preventing multiple packet reception and generation of broadcast storm in a normal state when no failure has occurred.

US 2005/0226265 A1 discloses an inter-ring connection device connecting at least two rings, each consisting of network devices connected in a ring shape.

### Disclosure of Invention

### Problems to be solved by the Invention

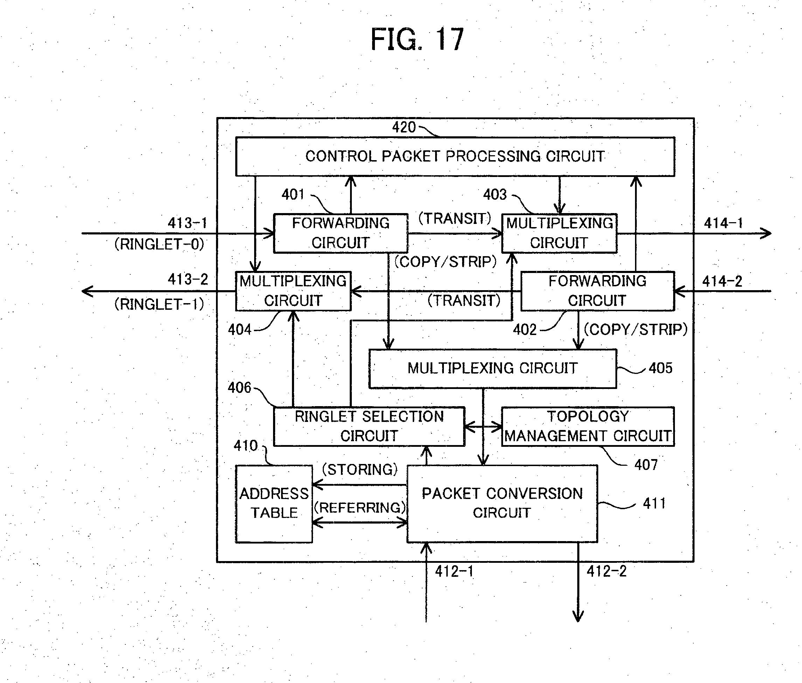

Fig. 17 is a block diagram showing a configuration example of an RPR node capable of realizing operations such as a topology discovery function, a protection function, and an OAM function. The RPR node shown in Fig. 17 has RPR span connection ports (packet ring span ports) 413-1 and 414-1, a forwarding circuit 401, and a multiplexing circuit 403, for processing a packet forwarded on a ringlet-0. The RPR node also has RPR span connection ports 413-2 and 414-2, a forwarding circuit 402, and a multiplexing circuit 404, for processing a packet forwarded on a ringlet-1. Furthermore, client ports 412-1 and 412-2 are connected to a client device or the client ports of an opposed interlink node.

The forwarding circuits 401, 402 forward an RPR packet which has been forwarded, to a client when the destination node address (RPR MAC DA) 224 of the RPR packet is the same as the RPR MAC address of the own node. The multiplexing circuit 405 multiplexes packets forwarded from the ringlets (specifically from the forwarding circuits 401, 402) to the client.

A packet conversion circuit 411 receives a packet in the state of an RPR packet and extracts a client packet from the RPR packet. The packet conversion circuit 411 forwards the client packet to the client port 412-2. The packet conversion circuit 411 also records (studies) correspondences between the source node address (RPR MAC SA) 225 of the received RPR packet and the source terminal address (MAC SA) 213 of the extracted client packet, into an address table 410. When a packet forwarded from the packet conversion circuit 411 is a unicast packet, a ringlet selection circuit 406 refers to a topology management circuit 407 to select a ringlet on which the packet is able to arrive at the destination node through the shortest path, sets TTL, and outputs the packet.

Furthermore, control packets are generated by a control packet processing circuit 420 in the RPR node and are transmitted to the ringlet-0 and the ringlet-1 through the multiplexing circuits 403 and 404 and the RPR span connection ports 414-1 and 413-2. The forwarding circuits 401 and 402 receive control packets from the ringlet-0 and the ringlet-1 through the RPR span connection ports 413-1 and 414-2. In IEEE 802.17, a control packet is defined for each of the above functions on an individual basis. The method of forwarding control packets which are transmitted from the multiplexing circuits 403 and 404 and received by the forwarding circuits 401 and 402 of another RPR node is similar to that of forwarding RPR data packets.

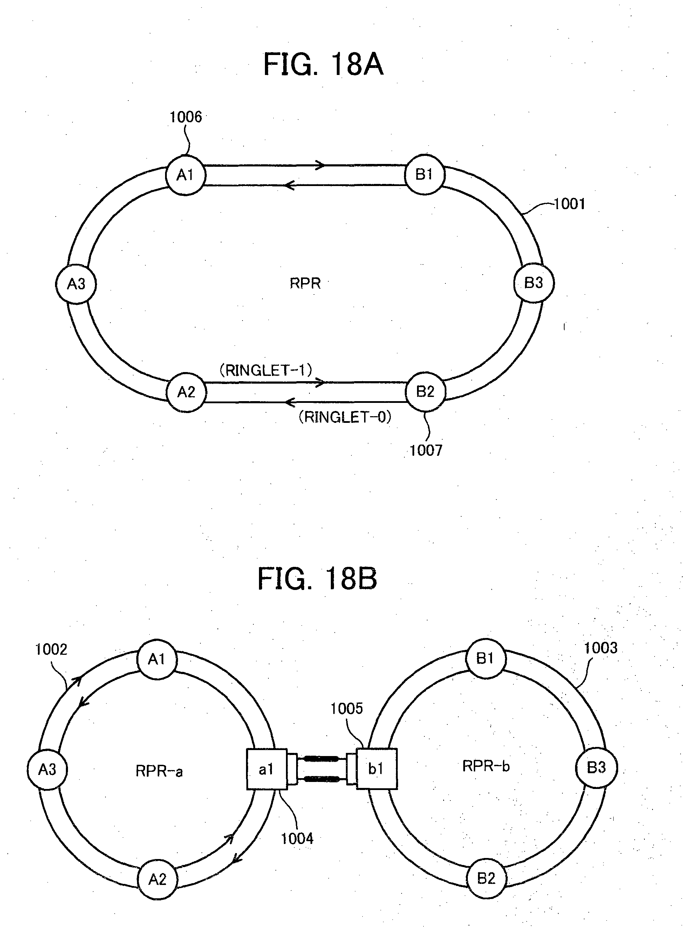

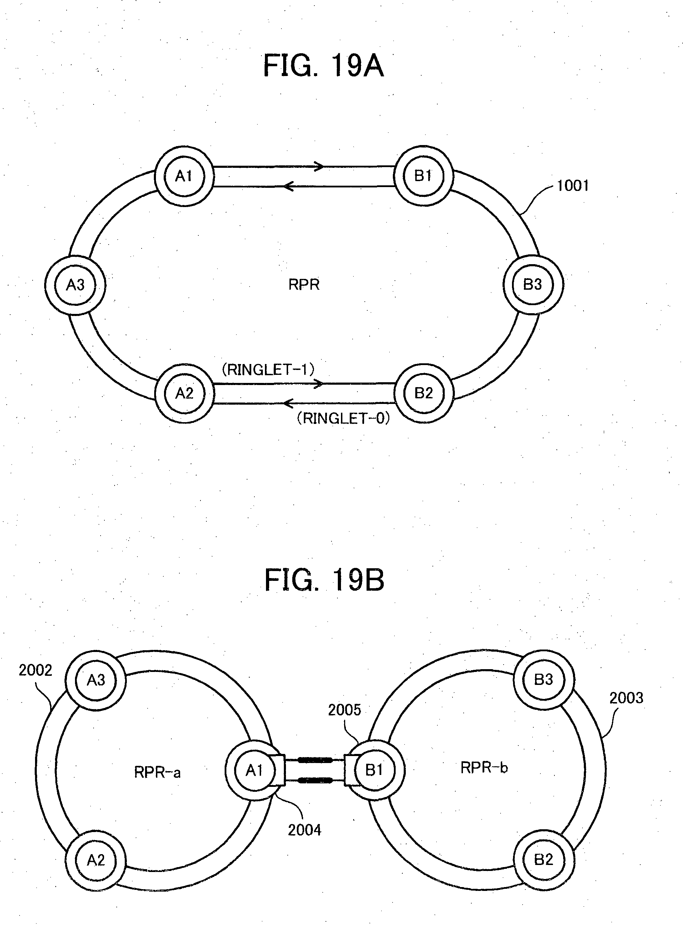

Next, packet ring division will be described with reference to Figs. 18A, 18B, 19A and 19B. In an RPR ring 1001 operated with a single ring as shown in Fig. 18A, there may be a change in operation environment such as an increase in the number of operation nodes, an increase in traffic, or a change in traffic pattern after operation starts. In this case, the operations manager may want to take a countermeasure such as controlling the increase of the ring band, restricting the failure spread range, restricting the effect spread range of traffic variation, or optimizing the traffic design considering failure occurrence. It is effective as this countermeasure to divide the packet ring into a plurality of rings. In this case, it is necessary to divide the ring while avoiding a service failure such as a communication interruption with a service providing state maintained. The procedure of dividing the ring will be described below using Figs. 18A, 18B, 19A and 19B. and 19B.

In order to divide the RPR ring configured as shown in Fig. 18A into two independent RPR rings 1002 and 1003 shown in Fig. 18B, two nodes 1004 and 1005 dedicated to interlink having a ring division function are added to optional spans as shown in Fig. 18B. In this case, nodes other than the nodes dedicated to interlink can be applied to ring division if they conform to IEEE 802.17, and can also be applied to IEEE 802.17-compliant devices which are different in vendor.

In the configuration shown in Fig. 19A, functions for ring division and interlink connection are provided in all nodes. Then, as shown in Fig. 19B, optional two nodes (e.g. nodes 2004 and 2005) are selected and used as interlink nodes to divide the ring into two independent RPR rings 2002 and 2003. In this case, although it is not necessary to newly add nodes dedicated to interlink connection configured as shown in Fig. 18B, it is necessary to implement functions for ring division and interlink connection in at least all nodes having the possibility of becoming an interlink connection node.

As a procedure of dividing a ring, a procedure of inserting interlink nodes in the ring after physically dividing the ring and a procedure of physically dividing the ring after inserting interlink nodes can be considered. However, in either of the procedures, RPR frame forwarding is certainly interrupted before and after the ring division processing in communication between nodes belonging to different rings after the ring division (for example, communication between the nodes 1006 and 1007 shown in Fig. 18A). In other words, in either of the configuration shown in Fig. 18A and the configuration shown in Fig. 19A, in-service ring division without communication interruption is impossible with an IEEE 802.17-compliant RPR function only.

It is therefore an object of the present invention to provide a packet ring network system, a packet forwarding method, and an interlink node that are capable of packet ring division and integration without communication interruption between nodes.

### Means for solving the Problems

In order to achieve the above object, a packet ring network system according to the first aspect of the present invention is a packet ring network system in which a plurality of nodes is connected by two ringlets forwarding a packet in mutually opposite directions, the packet ring network system comprising:
a selecting unit exclusively switching each node of two interlink nodes connected to each other between a first connection state in which a packet is transmitted and received between one interlink node connected to the other interlink node by a first span and a first node connected by a second span, and a second connection state in which a packet is transmitted and received between the first node connected by the second span and a second node connected by a third span; and
an address entry replacing unit replacing all of the address entries of destination nodes where a packet arrives beyond an interlink node, in a topology database in which information indicating hop counts from each of the nodes to other nodes is stored, with an address of an adjacent interlink node,
wherein the selecting unit switches the connection states of each node of the two interlink nodes connected to each other in a state that the nodes are transmitting a packet to and receiving a packet from each other using the address entries replaced by the address entry replacing unit.

It is desirable that the address entry replacing unit performs address entry replacing after stopping of packet forwarding on a span which connects nodes to each other, connection destinations of the nodes being changed by ring division or ring integration.

Each node of the two interlink nodes connected to each other may include:
a packet multiplexing unit multiplexing a client packet supplied from the second span and addressed to the own node, and a ring packet supplied from the second span and addressed to a node other than the own node, and supplying the multiplexed packet to the first span; and
a packet selectively-outputting unit selectively outputting a packet supplied from the first span as a client packet or a ring packet.

The selecting unit may be located in each node of the two interlink nodes connected to each other and is composed of a ring packet input unit selectively outputting any one of a ring packet supplied from the third span and a ring packet supplied from the packet selectively-outputting unit, and a ring packet output unit outputting a ring packet supplied from the second span to any one of the third span and the packet multiplexing unit.

All or part of nodes included in the packet ring network system may constitute the interlink nodes.

The interlink may be made redundant by an interlink redundant system.

The packet ring network system may have a plurality of rings before ring division or after ring integration.

In order to achieve the above object, a packet forwarding method according to the second aspect of the present invention is a packet forwarding method applied to a packet ring network system in which a plurality of nodes is connected by two ringlets forwarding a packet in mutually opposite directions, the method comprising:
a selecting step of exclusively switching each node of two interlink nodes connected to each other between a first connection state in which a packet is transmitted and received between one interlink node connected to the other interlink node by a first span and a first node connected by a second span, and a second connection state in which a packet is transmitted and received between the first node connected by the second span and a second node connected by a third span; and
an address entry replacing step of replacing all of the address entries of destination nodes where a packet arrives beyond an interlink node, in a topology database in which information indicating hop counts from each of the nodes to other nodes is stored, with an address of an adjacent interlink node,
wherein the selecting step switches the connection states of each node of the two interlink nodes connected to each other in a state that the nodes are transmitting a packet to and receiving a packet from each other using the address entries replaced in the address entry replacing step.

It is desirable that the address entry replacing step is performed after stopping of packet forwarding on a span which connects nodes to each other, connection destinations of the nodes being changed by ring division or ring integration.

Each node of the two interlink nodes connected to each other may include:
a packet multiplexing step of multiplexing a client packet supplied from the second span and addressed to the own node, and a ring packet supplied from the second span and addressed to a node other than the own node, and supplying the multiplexed packet to the first span; and
a packet selectively-outputting step of selectively outputting a packet supplied from the first span as a client packet or a ring packet.

In order to achieve the above object, an interlink node according to the third aspect of the present invention is an interlink node applied in a packet ring network system in which a plurality of nodes is connected by two ringlets forwarding a packet in mutually opposite directions, the interlink node comprising,
a selecting unit exclusively switching between a first connection state in which a packet is transmitted and received between one interlink node connected to the other interlink node by a first span and a first node connected by a second span, and a second connection state in which a packet is transmitted and received between the first node connected by the second span and a second node connected by a third span,
wherein the selecting unit switches the connection states in a state that the nodes are transmitting a packet to and receiving a packet from each other using address entries obtained by replacing all of the address entries of destination nodes where a packet arrives beyond the interlink node, in a topology database in which information indicating hop counts from each of the nodes to other nodes is stored, with an address of an adjacent interlink node.

It is desirable that the address entry replacing is performed after stopping of packet forwarding on a span which connects nodes to each other, connection destinations of the nodes being changed by ring division or ring integration.

The interlink node may comprise:
a packet multiplexing unit multiplexing a client packet supplied from the second span and addressed to the own node, and a ring packet supplied from the second span and addressed to a node other than the own node, and supplying the multiplexed packet to the first span; and
a packet selectively-outputting unit selectively outputting a packet supplied from the first span as a client packet or a ring packet.

### Effect of Invention

According to the present invention, packet ring division and integration are possible without communication interruption.

### Brief Description of Drawings

Fig. 1 is a functional block diagram of an interlink node according to a first embodiment of the present invention;
Fig. 2 is a functional block diagram of the interlink node according to the first embodiment of the present invention;
Fig. 3 is a diagram illustrating an example of a packet ring network system before packet ring division;
Fig. 4A is a diagram illustrating ports of the interlink node, and Fig. 4B is a diagram illustrating the procedure of adding a pair of interlink nodes to the packet ring network system;
Fig. 5 is a diagram illustrating an example of the packet ring network system after addition of a pair of interlink nodes;
Fig. 6 is a diagram illustrating the processing of replacing address reference values of a topology database;
Fig. 7 is a diagram illustrating an example of a packet ring network system after packet ring division;
Figs. 8A and 8B are diagrams illustrating a packet ring network system according to a second embodiment of the present invention;
Fig. 9 is a functional block diagram of an interlink node according to a third embodiment of the present invention;
Fig. 10 is a diagram illustrating a packet ring network system according to a fourth embodiment of the present invention;
Fig. 11 is a diagram illustrating a packet ring network system according to a fifth embodiment of the present invention;
Fig. 12 is a configuration diagram of a packet ring network system;
Fig. 13 is a diagram showing a packet format of a packet ring;
Figs. 14A to 14C are diagrams illustrating a protection operation at a link failure of the packet ring;
Figs. 15A to 15C are diagrams illustrating a protection operation at a node failure of the packet ring;
Fig. 16 is a diagram illustrating FS (Forced Switch);
Fig. 17 is a functional block diagram of a conventional packet ring node;
Figs. 18A and 18B are diagrams illustrating a conventional packet ring dividing procedure; and
Figs. 19A and 19B are diagrams illustrating the conventional packet ring dividing procedure;

### Explanation of Reference

300: RPR interlink node
3001, 3002: Forwarding circuit
3003, 3004, 3005: Multiplexing circuit
3006: Ringlet selection circuit
3007: Topology management circuit
3010: Address table
3011: Packet conversion circuit
3012-1, 3012-2: Client port (tributary port of an RPR basic node)
3013-1, 3013-2: RPR span connection port (packet ring span port)
3014-1, 3014-2: RPR span connection port (packet ring span port)
3015, 3016: PHY selection circuit
3017: Frame selection output circuit
3018: Multiplexing circuit
3019: RPR basic node section
3021-1, 3021-2: Tributary port
3022-1, 3022-2: RPR span connection port (packet ring span port)

### Best Mode for Carrying Out the Invention

Embodiments of the present invention will be described below with reference to the drawings.

### (First Embodiment)

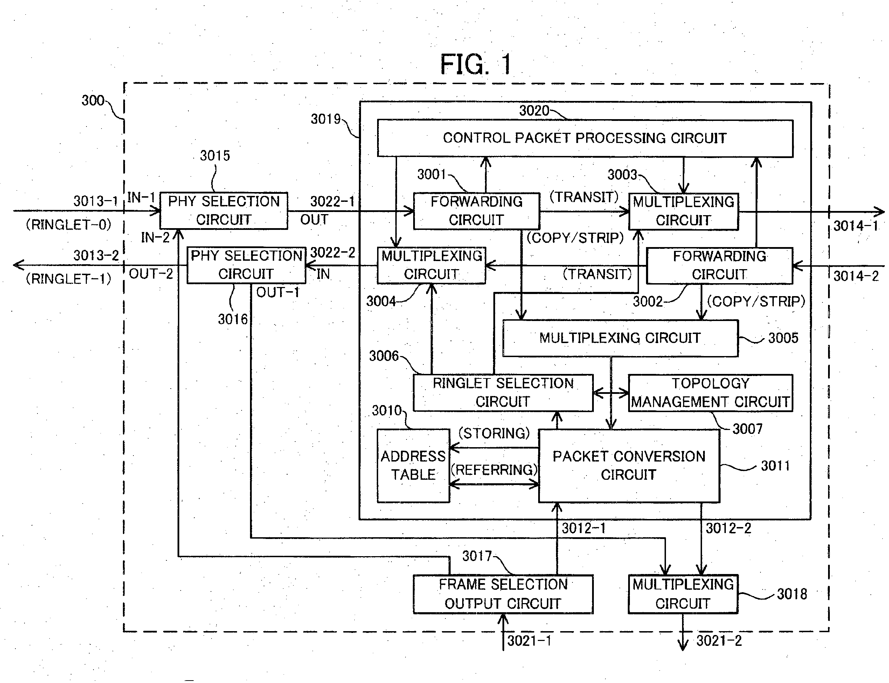

Fig. 1 is a functional block diagram of an RPR interlink node according to the first embodiment of the present invention. The RPR interlink node shown in Fig. 1 realizes an RPR packet forwarding function in a packet ring network system including a ringlet-0 and a rinlet-1 forwarding a packet in mutually opposite directions. As shown in Fig. 1, an RPR interlink node 300 includes an RPR basic node section 3019, PHY selection circuits (physical selection circuits) 3015 and 3016, a frame selection output circuit 3017, a multiplexing circuit 3018, an RPR span connection port 3013 (3013-1, 3013-2), an RPR span connection port 3014 (3014-1, 3014-2), and a tributary port 3021 (3021-1, 3021-2).

First, the configuration of the RPR basic node section 3019 will be described with reference to Fig. 1. The RPR basic node section 3019 has forwarding circuits 3001 and 3002, multiplexing circuits 3003, 3004, and 3005, a ringlet selection circuit 3006, a topology management circuit 3007, an address table 3010, a packet conversion circuit 3011, a client port 3012 (3012-1, 3012-2), and a control packet processing circuit 3020.

The forwarding circuit 3001 refers to a destination node address (RPR MAC DA) 224 of an RPR packet forwarded from the ringlet-0. When the destination node address (RPR MAC DA) 224 is the same as the RPR MAC address of the own node, the forwarding circuit 3001 extracts (deletes) the RPR packet from the ringlet-0 and forwards the RPR packet to a client through the multiplexing circuit 3005. Incidentally, it is written as "Strip" to extract a packet forwarded from a ringlet out of the ring and forward the packet to a client.

On the other hand, when the destination node address (RPR MAC DA) 224 is not the same as the RPR MAC address of the own node, the forwarding circuit 3001 transmits the forwarded packet to the same ringlet. Incidentally, it is written as "Transit" to forward a packet forwarded from a ringlet to the ringlet.

When the forwarded RPR packet is a broadcast packet, the forwarding circuit 3001 forwards the broadcast packet to the client and also to the ringlet-0. Incidentally, it is written as "Copy" to forward a packet forwarded from a ringlet to a client while forwarding the packet to the ringlet.

The forwarding circuit 3002 operates like the forwarding circuit 3001 except that a ringlet from which an RPR packet is forwarded and a ringlet to which the RPR packet is forwarded are not the ringlet-0 but the ringlet-1.

The multiplexing circuit 3003 multiplexes a packet supplied from the client port 3012-1 and a packet supplied from the ring (a packet output by the forwarding circuit 3001) and transmits the multiplexed packet to the ringlet-0. Likewise, the multiplexing circuit 3004 multiplexes a packet supplied from the client port 3012-1 and a packet from the ring (a packet output by the forwarding circuit 3002) and transmits the multiplexed packet to the ringlet-1.

The multiplexing circuit 3005 multiplexes packets forwarded from the ringlets (specifically from the forwarding circuits 3001 and 3002) to the client.

When a packet supplied from the packet conversion circuit 3011 is a unicast packet, the ringlet selection circuit 3006 refers to the topology management circuit 3007 to select a ringlet on which the packet is able to arrive at the destination node through the shortest path, sets TTL, and outputs the packet. When a packet sent from the packet conversion circuit 3011 is a broadcast packet (including an unknown unicast packet), the ringlet selection circuit 3006 selects a ringlet according to a predetermined forwarding method (unidirectional flooding or bidirectional flooding), sets TTL, and outputs the packet.

The topology management circuit 3007 stores and manages the RPR MAC addresses of nodes which line up clockwise and the RPR MAC addresses of nodes which line up counterclockwise, on the ring including the own node.

The address table 3010 stores the MAC addresses of user terminals and the RPR MAC addresses of nodes in the ring in association with each other. The address table 3010 functions as an FDB.

The packet conversion circuit 3011 receives a packet to be forwarded to the client from each of the ringlets (specifically from the multiplexing circuit 3005 through each of the forwarding circuits 3001 and 3002). The packet conversion circuit 3011 receives a packet in the state of an RPR packet and extracts a client packet from the RPR packet. In other words, it performs decapsulating. The packet conversion circuit 3011 forwards the client packet to the client port 3012-2. Furthermore, the packet conversion circuit 3011 stores (studies) the source node address (RPR MAC SA) 225 included in the received RPR packet and the source terminal address (MAC SA) 213 included in the extracted client packet, in association with each other, in the address table 3010.

Furthermore, the packet conversion circuit 3011 receives a client packet from a client device through the client port 3012-1. At that time, the package converting circuit 3011 refers to the address table 3010 to retrieve an RPR MAC address corresponding to the destination terminal address (MAC DA) 212 included in the received client packet. If there is an entry, in other words, when succeeding in the retrieval, the packet conversion circuit 3011 assumes the retrieved RPR MAC address to be the destination node address (RPR MAC DA) 224.

If there is no entry, in other words, when failing in the retrieval, the packet conversion circuit 3011 assumes a broadcast address to be the destination node address (RPR MAC DA) 224. In this case, the packet conversion circuit 3011 generates an unknown unicast packet. Then, the packet conversion circuit 3011 sets the destination node address (RPR MAC DA) 224, and outputs a packet in which the client packet has been encapsulated, to the ringlet selection circuit 3006.

The client port 3012 is composed of a client port 3012-1 receiving a client packet supplied from a client device and a client port 3012-2 supplying a client packet to the client device.

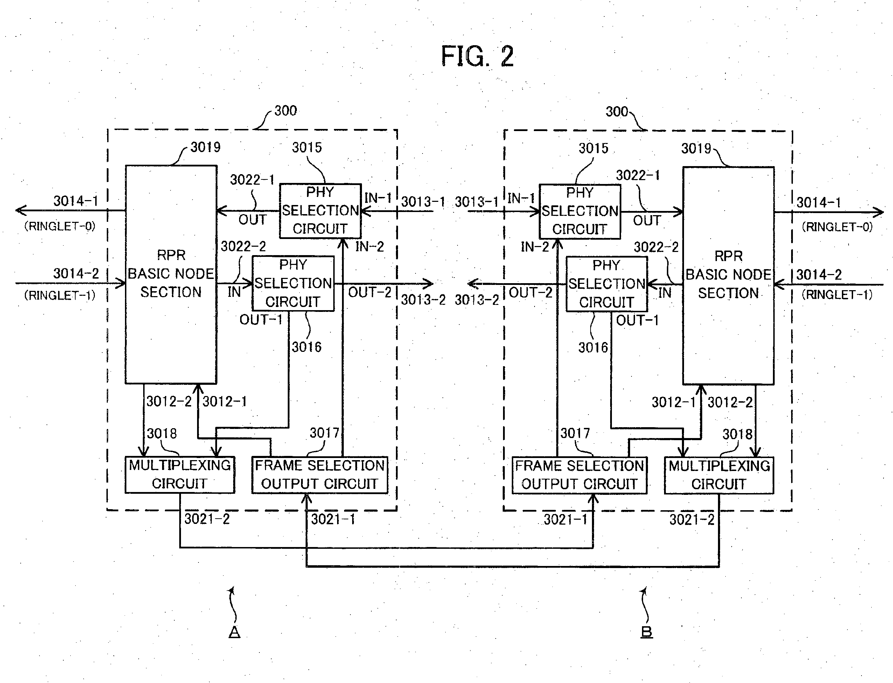

Next, the PHY selection circuits 3015 and 3016, the frame selection output circuit 3017, and the multiplexing circuit 3018 will be described using Figs. 1 and 2. Fig. 2 shows two RPR interlink nodes 300 in the state that the tributary ports 3021-1 and 3021-2 of one (A) of the RPR interlink nodes 300 are connected to the tributary ports 3021-2 and 3021-1 of the other (B) of the RPR interlink nodes 300, respectively. Since the two RPR interlink nodes 300 are identical in configuration, the same notations are attached to the same components of the RPR interlink nodes 300.

The PHY selection circuits 3015 and 3016 are each an electrical signal switch. The PHY selection circuits 3015 and 3016 realize a selecting unit switching between the state of transmitting and receiving a packet between the span end of one of two nodes becoming interlink nodes and the span end of the opposite interlink node and the state of transmitting and receiving a packet between the span end of one of the two nodes and the span end of a node other than the opposite interlink node.

The PHY selection circuit 3015 establishes any one of the state of supplying a packet supplied from the frame selection output circuit 3017 to the forwarding circuit 3001 and the state of supplying a packet supplied from the RPR span connection port 3013-1 to the forwarding circuit 3001. The PHY selection circuit 3016 establishes any one of the state of supplying a packet supplied from the multiplexing circuit 3004 to the RPR span connection port 3013-2 and the state of supplying a packet supplied from the multiplexing circuit 3004 to the multiplexing circuit 3018.

The frame selection output circuit 3017 determines whether a packet supplied from the tributary port 3021-1 is an RPR packet or a client packet, and supplies the RPR packet to the PHY selection circuit 3015 and supplies the client packet to the packet conversion circuit 3011. The multiplexing circuit 3018 multiplexes the RPR packet supplied from the PHY selection circuit 3016 and the client packet supplied from the packet conversion circuit 3011, and supplies the multiplexed packet to the tributary port 3021-2.

Next, the RPR span connection ports 3013 and 3014 and the tributary port 3021 will be described.

The RPR span connection port 3013 is composed of an RPR span connection port 3013-1 supplying an RPR packet supplied from the ringlet-0 to the PHY selection circuit 3015 and an RPR span connection port 3013-2 supplying an RPR packet supplied from the PHY selection circuit 3016 to the ringlet-0.

The RPR span connection port 3014 is composed of an RPR span connection port 3014-1 supplying an RPR packet supplied from the multiplexing circuit 3003 to the ringlet-0 and an RPR span connection port 3014-2 supplying an RPR packet supplied from the ringlet-1 to the forwarding circuit 3002.

The tributary port 3021 is composed of a tributary port 3021-1 to which a packet is supplied from a client device or the opposite RPR interlink node 300 and a tributary port 3021-2 supplying a packet to the client device or the opposite RPR interlink node 300.

Next, the operation of an RPR interlink node according to the first embodiment of the present invention will be described with reference to the drawings.

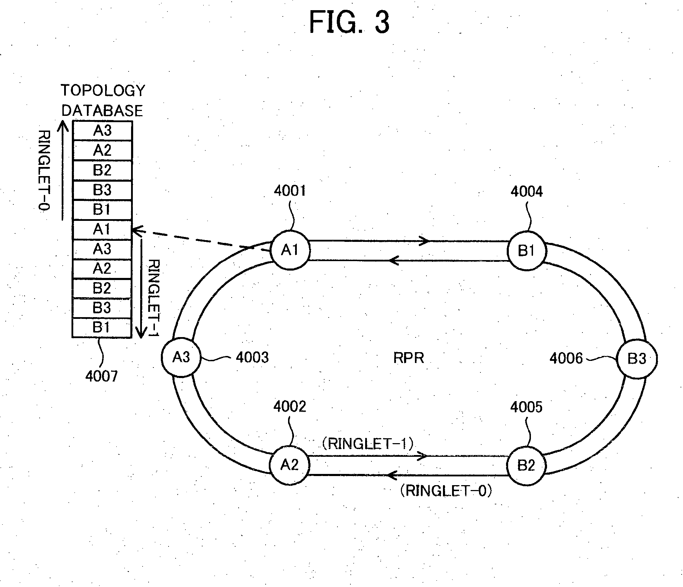

Fig. 3 shows a packet ring network system having six nodes as an example of a packet ring network system before packet ring division. A topology database 4007 is a simply represented topology database which the node (A1) 4007 creates with a topology discovery. The topology database 4007 is managed in the topology management circuit 3007. In the topology database 4007, information collected about all nodes except the own node and both ringlets, specifically, information showing the hop counts from the own node to the other nodes through the ringlets, span failure information, and the like are set. As shown in Fig. 3, the topology database of the node (A1) 4001 shows that a packet from the node (A1) 4001 is able to arrive at the node (A2) 4002 by four hops on the ringlet-0 and two hops on the ringlet-1.

As described below, the topology management circuit 3007 converts all of the address entries of destination nodes where a packet arrives beyond interlink nodes in the topology database 4007 to the address of an adjacent interlink node to set a destination address.

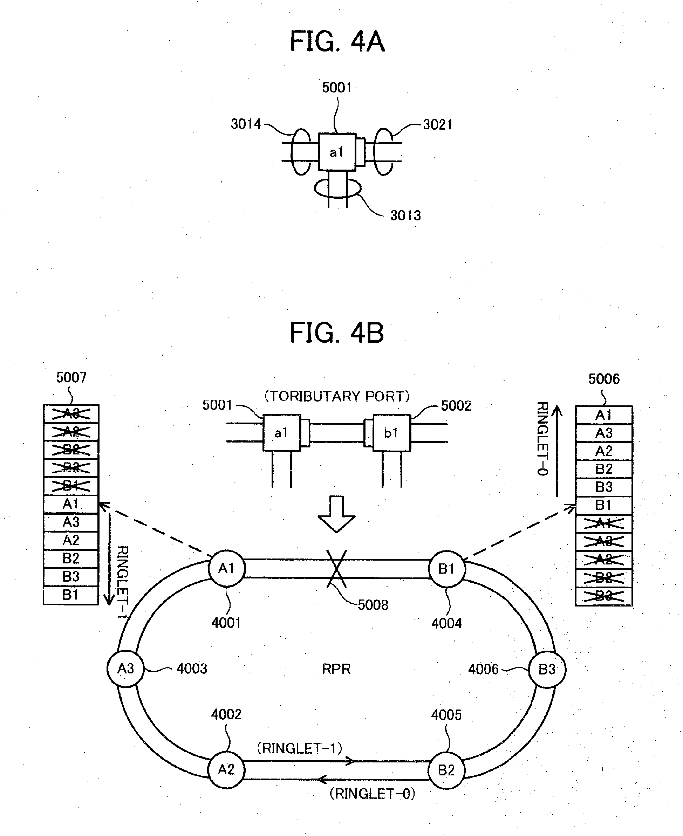

The procedure of dividing the RPR ring into two packet rings of a packet ring RPR-a having the nodes (A1) 4001, (A2) 4003, and (A3) 4002 and a packet ring RPR-b having the nodes (B1) 4004, (B2) 4006, and (A3) 4005, will be described below with reference to Figs. 4 to 7.

Fig. 4A illustrates ports of an interlink node. An interlink node 5001 has a configuration similar to that of the interlink node 300 shown in Fig. 1 and has RPR span connection ports 3013 and 3014 and a tributary port 3021 as shownin Fig. 4A. An interlink node 5002 has a configuration similar to that of the interlink node 5001.

Fig. 4B illustrates the procedure of adding a pair of interlink nodes to the packet ring network system. First, as shown in Fig. 4B, the link (span 5008) between the node (A1) 4001 and the node (B1) 4004 is set to FS (Forced Switch) to cause communication interruption.

At that time, when recognizing that FS has been set to the span 5008, each of the nodes of the packet ring network system sets its transmitting mode from the own node to a steering mode (or lap mode) at once so as not to generate a packet passing through the span 5008. Specifically, the topology discovery of each of the nodes retrieves nodes to which a packet is transmitted from the own node through the span 5008 (nodes where the packet can not arrive) for each ringlet and records the retrieved nodes in the topology database. Each of the nodes is controlled not to transmit a packet to nodes which are recorded as nodes where a packet can not arrive in the topology database using the ringlet.

For example, in the case of the node (A1) 4001, with respect to the ringlet-0, all nodes are recorded as nodes where no packet can arrive, but with respect to the ringlet-1, all of the nodes are not recorded as nodes where no packet can arrive. For this reason, when the node (A1) 4001 transmits a packet to other nodes, it is not able to use the ringlet-1, but is able to transmit a packet to all other nodes using the ringlet-0. In this way, communication between nodes is secured also under FS setting. In the topology databases shown in Fig. 4B and the like, places which are marked with "x" mean nodes where data is not able to arrive (nodes where no data can arrive).

As shown in Fig. 4B, in the state that the span 5008 has been set to FS, the interlink nodes 5001 and 5002 whose tributary ports 3021 are connected to each other are inserted in the span 5008 to which FS has been set. Then, the RPR span connection port 3014 of the interlink node 5001 is connected to the RPR span connection port of the node (A1) 4001 as well as the RPR span connection port 3014 of the interlink node 5002 is connected to the RPR span connection port of the node (B1) 4004. At that time, other RPR span connection ports 3013 of the interlink nodes 5001 and 5002 are left unconnected.

Specifically, In/Out of each of the PHY selection circuits 3015 and 3016 of the interlink node 5001 is set so that the forwarding circuit 3001 and the multiplexing circuit 3004 are connected to the tributary port 3021. In other words, the PHY selection circuit 3015 is set so as to output an input signal from In-2 to Out, and the PHY selection circuit 3016 is set so as to output an input signal from In to Out-1. The same can be said of the interlink node 5002.

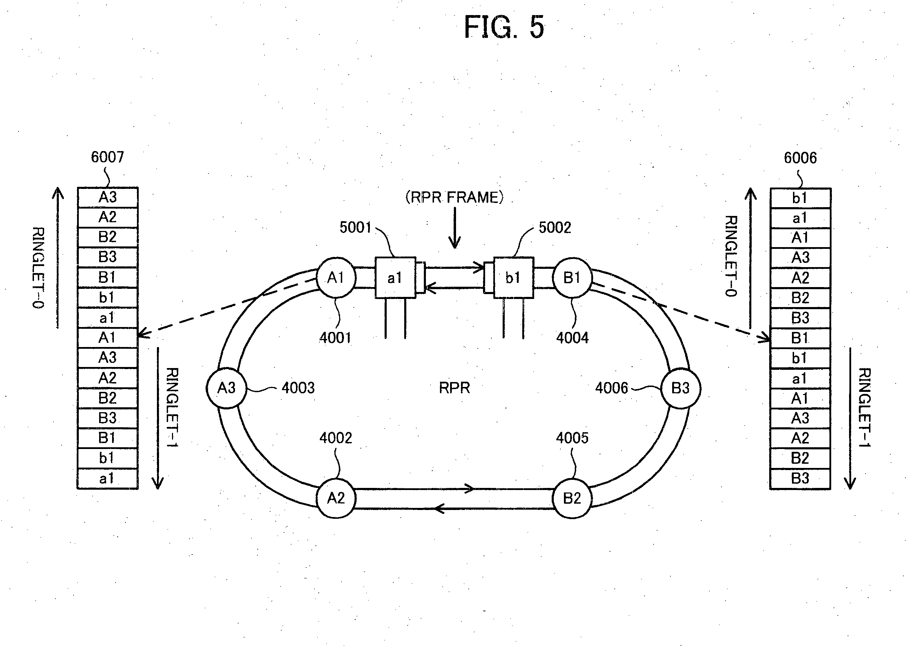

Then, as shown in Fig. 5, all nodes except the interlink nodes 5001 and 5002 are switched to a usual forwarding mode. Specifically, all nodes including the interlink nodes 5001 and 5002 start topology discoveries of the own nodes and recreates the topology databases at the same time when recognizing FS release of the span 5008 in Fig. 4B.

For example, in the case of the topology databases 6007 and 6006 of the nodes (A1) 4001 and (B1) 4004, the interlink nodes 5001 (a1) and 5002 (b1) are added to the entries of the 6-node packet ring network system as shown in Fig. 5. In Fig. 4B, the topology databases 5007 and 5006 of the nodes (A1) 4001 and (B1) 4004 before the interlink nodes 5001 (a1) and 5002 (b1) are added are shown.

By the recreation of the topology databases, all the nodes recognize the topologies as an 8-node packet ring network system including the interlink nodes. RPR packets are forwarded to the tributary ports 3021 of the interlink nodes 5001 and 5002 connected to each other. In other words, the span between the tributary ports of the interlink nodes 5001 and 5002 at this time functions as an RPR ring span.

However, no device transmitting and receiving a client packet such as a client device is connected to the interlink nodes 5001 and 5002. For this reason, there is no client packet in which the interlink node 5001 or 5002 is set as DA (Destination Address) or SA (Source Address), and RPR packet forwarding processing by the interlink node 5001 or 5002 is only Transit.

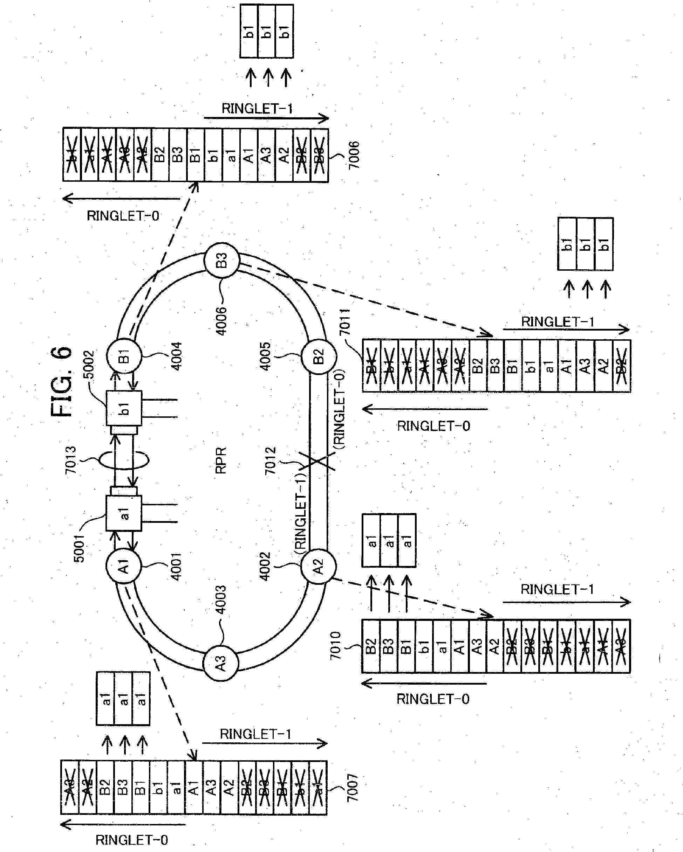

Next, the span 7012 between the nodes (A2) 4002 and (B2) 4005 is set to FS as shown in Fig. 6. As in the case of FS setting of the span 5008, all nodes shift to a steering mode (or a lap mode) and packet forwarding on the span 7012 stops at the same time when the topology discoveries of all nodes are started and their topology databases are recreated. In this way, the RPR basic node section 3019 stops in advance the packet forwarding on a span which is connecting nodes with each other the destinations of which are changed by ring division or ring integration, just before address entry replacing.

For example, the operation in the case that the node (A1) 4001 refers to its topology database 7007 and transmits a packet will be described. The node (A1) 4001 performs replacing of entries in the topology database showing nodes where a packet from the own node is able to arrive on the ringlet-0. Specifically, the topology management circuit 3007 replaces the entry reference values of nodes where a packet arrives through the interlink nodes (a1) 5001 and (b1) 5002 in this order, that is, the nodes (B1), (B3), and (B2) on the ringlet-0 with the interlink node address (a1). The node (A1) 4001 generates an RPR packet based on the entry reference values after the replacement.

For example, when transmitting a packet supplied from a client, if the RPR address of the destination node is (B3), the topology management circuit 3007 replaces the entry (B3) on the ringlet-0 with (a1) as shown in the block 7007 of Fig. 6. The node (A1) 4001 stores in the destination node address (RPR MAC DA) 224 of the RPR packet. For all nodes (except the interlink nodes 5001 and 5002) other than the node (A1) 4001, the same rule is applied to entries of the topology database where a packet is able to arrive on the ringlet-0.

With respect to the ringlet-1, an operation when, for example, the node (B3) 4006 refers to its topology database 7011 and transmits a packet will be similarly described. The node (B3) 4006 performs replacing of the entries of the topology database showing nodes where a packet from the own node is able to arrive on the ringlet-1. Specifically, it replaces the entry reference values of nodes where a packet arrives through the interlink nodes (b1) 5002 and (a1) 5001 in this order, that is, the nodes (A1), (A3), and (A2) on the ringlet-1, with the interlink node address (b1), and generates an RPR packet.

More specifically, for example, when transmitting a client packet, if the RPR address of the destination node is (A1), it replaces the entry (A1) on the ringlet-0 with (b1), and stores the address (b1) in the destination node address (RPR MAC DA) 224 of the RPR packet. For all nodes (except the interlink nodes 5001 and 5002) other than the node (B3) 4006, the same rule is applied to entries of the topology database where a packet is able to arrive on the ringlet-1.

Next, the RPR data packet forwarding operation of the interlink nodes will be described.

The interlink node (a1) 5001 performs forwarding processing which varies between the case that an RPR data packet supplied from the ringlet-0 is addressed to the own node and the case that the RPR data packet is addressed to a node other than the own node.

The interlink node (a1) 5001 drops an RPR data packet addressed to the own node in the forwarding circuit 3002. The RPR data packet is supplied to the packet conversion circuit 3011 through the multiplexing circuit 3005. The packet conversion circuit 3011 decapsulates the RPR header. After that, the RPR data packet is output as a client packet from the tributary port 3021-2 through the multiplexing circuit 3018.

The interlink node (b1) 5002 connected to the interlink node (a1) 5001 transmits the client packet received from the tributary port 3021-1 to the ringlet-0 as an RPR data packet in conformity with a usual RPR node operation. At that time, in the interlink node (b1) 5002, correspondences between the destination terminal address 212 and the RPR MAC address corresponding thereto have not been established (the address has not been studied), so that the RPR packet may become a broadcast packet. Also in this case, since the span 7012 between the node (A2) 4002 and the node (B2) 4005 has been set to FS in advance, the packet is not forwarded beyond the FS set span and inconvenience such as packet duplicate arrival does not occur.

The same can be said of packet forwarding by which the interlink node (b1) 5002 supplies an RPR data packet addressed to the own node supplied from the ringlet-1 to the ringlet-1 through the interlink node (a1) 5001.

On the other hand, the interlink node (a1) 5001 performs Transit forwarding processing within the RPR basic node section 3019 for an RPR data packet which is addressed to a node other than the own node. By the path setting of the PHY selection circuits 3015 and 3016 already described, the RPR data packet is supplied to the multiplexing circuit 3018 as it is. The multiplexing circuit 3018 multiplexes the RPR data packet and a client packet output from the packet conversion circuit 3011 and outputs the multiplexed packet to the tributary port 3021-2. The packets are then supplied from the tributary port 3021-2 to the tributary port 3021-1 of the interlink node (b1) 5002 connected to the interlink node (a1) 5001.

The tributary port 3021-1 of the interlink node (b1) 5002 supplies the supplied RPR data packet to the frame selection output circuit 3017. The frame selection output circuit 3017 supplies the RPR data packet to the PHY selection circuit 3015. Here, the PHY selection circuit 3015 has been set so as to output a packet supplied from the port In-2 to the Out port. For this reason, the RPR data packet is supplied to the forwarding circuit 3001 of the RPR basic node section 3019, which performs packet forwarding processing for the RPR data packet assuming that it is a usual RPR data packet, and supplies the RPR data packet to the ringlet-0. The same can be said of packet forwarding by which the interlink node (b1) 5002 supplies an RPR data packet addressed to a node other than the own node and supplied from the ringlet-1 to the ringlet-1 through the interlink node (a1) 5001.

Next, the control packet forwarding operation of the interlink nodes will be described. The forwarding circuit 3002 of the interlink node (a1) 5001 forwards a control packet addressed to the own node and supplied from the ringlet-0 to the control packet processing circuit 3020. The control packet processing circuit 3020 performs processing according to the type of the control packet. The same can be said of the forwarding circuit 3002 of the interlink node (b1) 5002 to which an RPR control packet addressed to the own node is supplied from the ringlet-1.

On the other hand, the interlink node (a1) 5001 performs Transit forwarding processing in the RPR basic node section 3019 for an RPR control packet addressed to a node other than the own node and supplied from the ringlet-0. Specifically, like an RPR data packet, the RPR control packet is supplied to the multiplexing circuit 3018 as it is by the path setting of the PHY selection circuits 3015 and 3016. The multiplexing circuit 3018 multiplexes the RPR control packet and a client packet supplied from the packet conversion circuit 3011, and supplies the multiplexed packet to the tributary port 3021-2. The RPR control packets are then supplied from the tributary port 3021-2 to the tributary port 3021-1 of the interlink node (b1) 5002 connected to the interlink node (a1) 5001.

The tributary port 3021-1 of the interlink node (b1) 5002 supplies the supplied RPR control packets to the frame selection output circuit 3017. The frame selection output circuit 3017 supplies the RPR control packets to the PHY selection circuit 3015. The PHY selection circuit 3015 has been set so as to output packets supplied from the port In-2 to the Out port. For this reason, the RPR control packets are supplied to the forwarding circuit 3001 of the RPR basic node section 3019, which performs packet forwarding processing for the RPR control packet assuming that it is a usual RPR control packet and supplies the RPR control packet to the ringlet-0.

The same can be said of packet forwarding by which the interlink node (b1) 5002 supplies an RPR control packet addressed to a node other than the own node and supplied from the ringlet-1 to the ringlet-1 through the interlink node (a1) 5001.

As already described, during the ring division, a client packet and an RPR packet are forwarded in a mixed state in the span 7013 connecting the tributary ports 3021 of the interlink nodes (a1) 5001 and (b1) 5002 to each other. Specifically, an RPR packet addressed to an interlink node supplied from a node in which an address reference value of the topology database has been replaced with the address of the interlink node is forwarded as a client packet on the span 7013. On the other hand, a packet supplied from a node in which the address replacing has not been performed is forwarded as an RPR packet on the span 7013 because an RPR node which has been entered in the topology database has been still set as a destination. When the address replacing has been completed in all nodes, RPR packets to be forwarded on the span 7013 disappear and become client packets.

Next, switches in packet forwarding mode in the interlink nodes will be described.

After the address replacing has been completed in all nodes, an FS set port of the node (A2) 4002 is connected to an unconnected port of the interlink node (a1) 5001 by the span 8014 as well as an FS set port of the node (B2) 4005 is connected to the interlink node (b1) 5002 by the span 8015. As already described, all of the packets forwarded beyond the span 7013 between the interlink nodes become client packets, so that there is no RPR packet.

In this state, the edge status of the span with which the PHY selection circuits 3015 and 3016 and the RPR span connection ports 3022-1 and 3022-2 of the interlink nodes (a1) 5001 and (b1) 5002 are connected is set to FS. All of the packets forwarded beyond the span 7013 between the interlink nodes are addressed to the interlink node (a1) 5001 or the interlink node (b1) 5002, dropped by the forwarding circuit 3002 of each node, and supplied to the tributary port 3021-2 as client packets. Thus, there is no RPR packet which is output to the tributary port 3021 through the PHY selection circuits 3015 and 3016. As a result, even if the span is set to FS, there is no influence on the packet forwarding.

Next, the packet forwarding route of the PHY selection circuits 3015 and 3016 of the interlink node (a1) 5001 is switched from the tributary port 3021 to the RPR span 3013. In other words, the PHY selection circuit 3015 is set to forward a packet input from the In-1 port to the Out port, and the PHY selection circuit 3016 is set to forward a packet input from the In port to the Out-2 port. By this setting, it becomes possible for the RPR basic node section 3019 to forward an RPR packet to the adjacent RPR node (A2) 4002 through the PHY selection circuit 3016 and the span port 3013-2. Furthermore, by this setting, it becomes possible for the RPR basic node section 3019 to receive an RPR packet supplied from the adjacent RPR node (A2) 4002 through the span port 3013-1 and the PHY selection circuit 3015.

A TP frame broadcasted from the interlink node (a1) 5001 is received by all of the nodes (A1) 4001, (A3) 4003, and (A2) 4002 other than the own node constituting an RPR ring after the division. Furthermore, TP frames transmitted by the nodes (A1) 4001, (A3) 4003, and (A2) 4002 are received by the interlink node (a1) 5001. In other words, the topology discoveries of all of the four nodes constituting the divided RPR ring RPR-a 8016 create topology databases as one RPR ring.

Nodes other than the nodes constituting RPR-a, that is, the interlink node (b1) 5002 and the nodes (B1) 4004, (B3) 4006, and (B2) 4005 are not recognized as RPR nodes constituting the packet ring network system by the four nodes constituting the RPR ring RPR-a 8016. In other words, topology entries of nodes constituting an RPR ring after ring division can be excluded without communication interruption from the topology databases of nodes constituting another RPR ring after the ring division. The same can be said of the RPR ring RPR-b 8017.

As described above, one RPR ring can be divided without communication interruption by using the interlink nodes (a1) 5001 and (b1) 5002 having function deployment like the RPR interlink node 300 including the RPR basic node section 3019 shown in Fig. 1.

It is also possible to integrate two RPR rings into one RPR ring by following a procedure opposite to the ring division procedure described above using interlink nodes having the function deployment shown in Fig. 1. In other words, the procedure of integrating two RPR rings into one RPR ring without communication interruption is virtually disclosed in this embodiment.

### (Second Embodiment)

As the first embodiment, the operation procedure of dividing an RPR ring having existing nodes as shown in Fig. 18A by adding the interlink nodes 1004 and 1005 to the RPR ring and the configuration of the interlink nodes 1004 and 1005 are shown. However, also when a function for ring division and interlink connection is implemented in all or part of the nodes constituting an RPR ring to be divided as shown in Fig. 19A, the RPR ring can be divided without communication interruption.

In this case, all or part of the nodes are configured to have the function of an interlink node shown in Fig. 1 in advance. In the case of this configuration, rings can be divided and integrated by designating existing nodes as interlink nodes without adding nodes as interlink nodes. The reason is that an interlink node has a unit connecting the RPR span connection port and the tributary port to the RPR basic node section alternately, a unit multiplexing an RPR packet and a client packet and supplying the multiplexed packet to the tributary port, and a unit separating an RPR packet from a client packet which have been supplied to the tributary port.

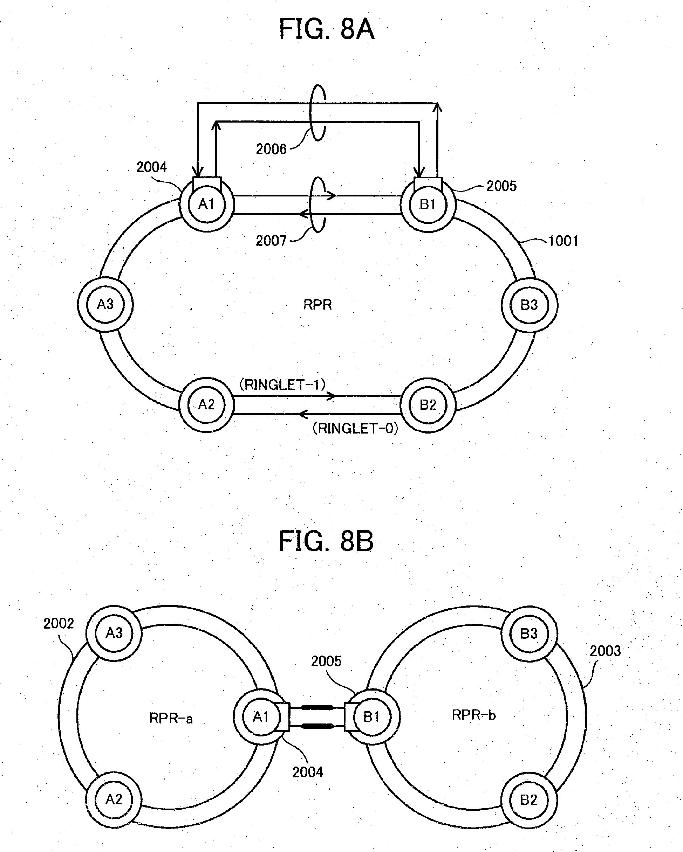

Fig. 8A shows an example in which all nodes have the interlink node function shown in Fig. 1. In this case, each of the nodes can be handled as an interlink node, so that the ring can be divided at any span. Fig. 8B shows an example in which the ring is divided at the span 2007. In other words, FS is set to the span 2007, and the tributary port 3021 of the node (A1) 2004 is connected to the tributary port 3021 of the node (B1) 2005. The subsequent operation procedure is similar to that of the first embodiment.

### (Third Embodiment)

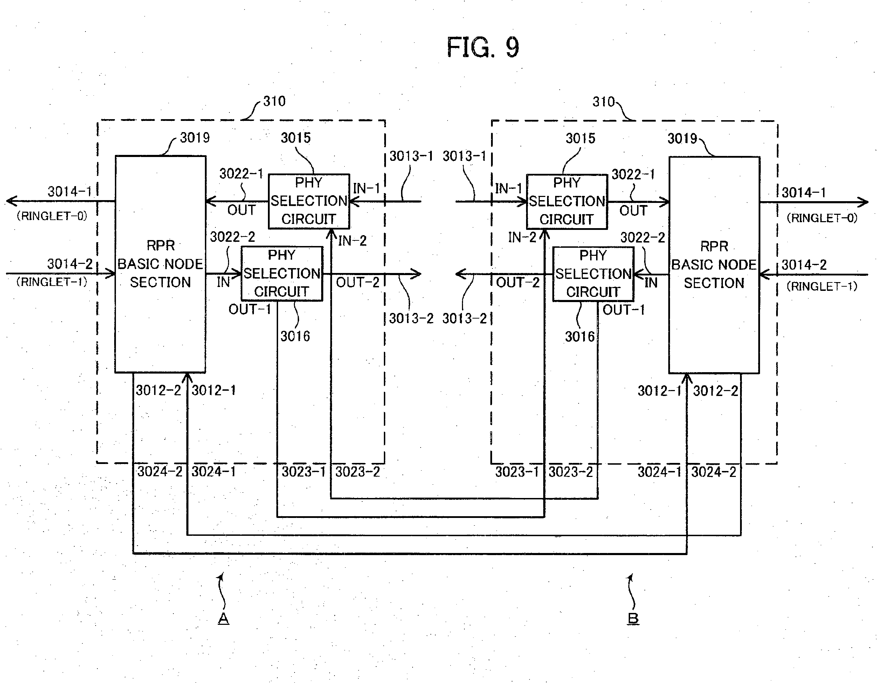

Fig. 9 is a functional block diagram showing another embodiment of an interlink node according to the present invention. Fig. 9 shows a configuration example in which the PHY selection circuits 3015 and 3016 of two RPR interlink nodes 310 are directly connected to each other and the tributary ports 3024 of them are directly connected to each other. Specifically, the tributary port 3024-1 of the A-side RPR interlink node 310 is connected to the tributary port 3024-2 of the B-side RPR interlink node 310, and the tributary port 3024-2 of the A-side RPR interlink node 310 is connected to the tributary port 3024-1 of the B-side BRP interlink node 310. The operation procedure of ring division is similar to that in the first embodiment. This embodiment is effective in the case that it can be allowed to mount ports having a sufficiently high speed to forward an RPR packet without causing congestion when a ring division procedure according to the present invention is implemented between interlink nodes. Then, this embodiment has an effect that the frame selection output circuit 3017 and the multiplexing circuit 3018 can be excluded to simplify the mounting.

### (Fourth Embodiment)

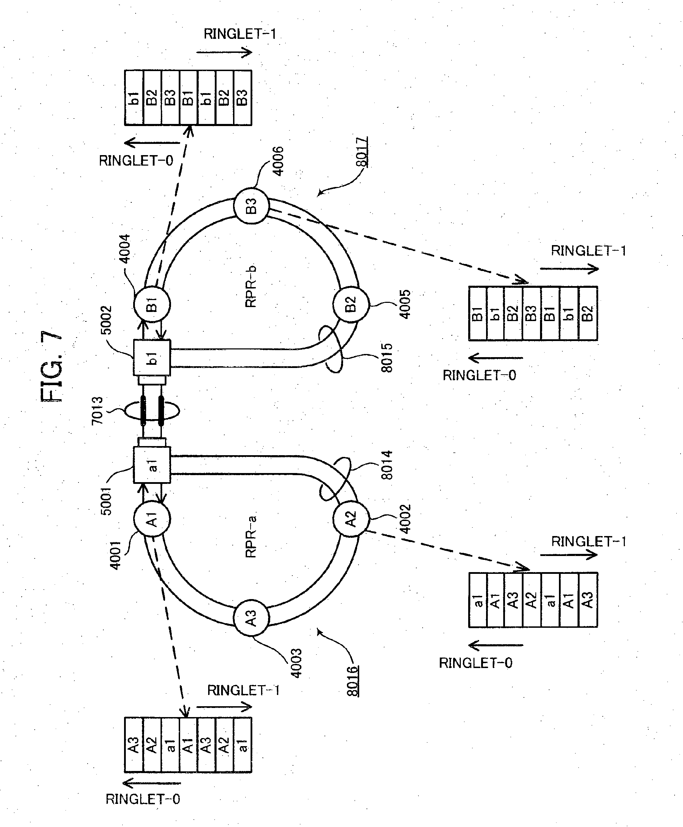

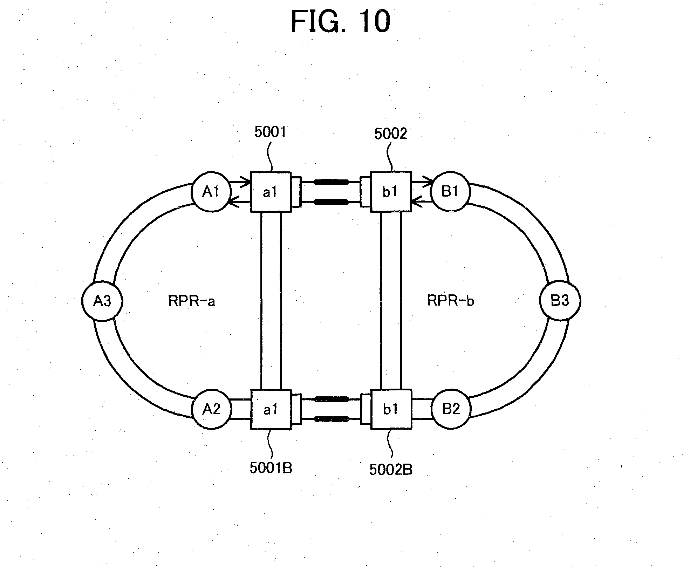

Fig. 10 illustrates a packet ring network system to which an interlink redundant system and the present invention are applied. The interlink redundant system provides a plurality of links and/or a plurality of nodes for one path in a packet ring network system. In the configuration shown in Fig. 10, the interlink redundant system is applied to the interlink nodes 5001 and 5002 shown in Fig. 7. In other words, in-service addition of an interlink node (interlink node 5001B) for interlink redundancy is made to the span 8014, and in-service addition of an interlink node (interlink node 5002B) for interlink redundancy is made to the span 8015. As a result, RPR ring interlink after division can be made redundant. A packet ring network system according to this embodiment has an effect that RPR ring interlink of high reliability after division can be achieved.

### (Fifth Embodiment)

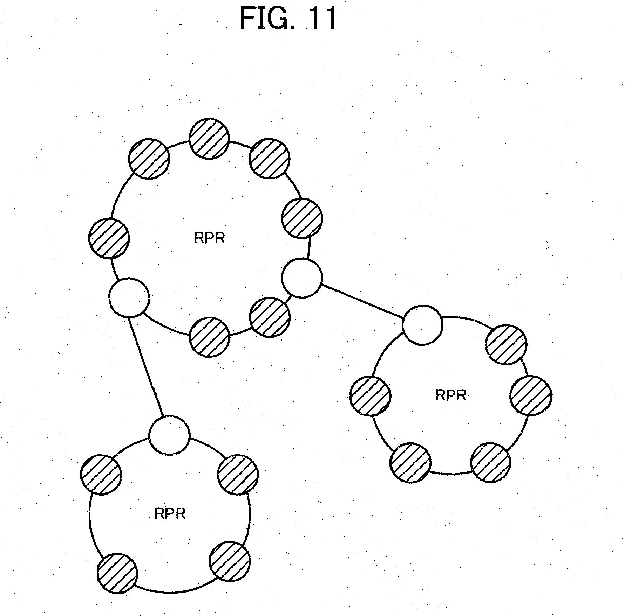

As shown in, for example, Fig. 11, the configuration and the operation procedure which are described above can be applied to any one of a plurality of RPR rings (three rings in the example shown in Fig. 11) already constituting a multi-ring. Thus, this embodiment has an effect that ring division and ring integration can be executed repeatedly to RPR rings as necessary.

In the above example, the configuration and operation of ring division are described. Ring integration can be achieved by following a procedure opposite to that of ring division.

While the present invention has been described with reference to embodiments, the invention is not limited to the embodiments. Various modifications which can be understood by those skilled in the art within the scope of the present invention can be made to the configuration and details of the present invention.

This application claims priority based on Japanese Patent publication JP 5029612 B2 published on September 19, 2012.

### Industrial Applicability

The present invention can be utilized for a packet ring network system, for example, which requires packet ring division and integration with service provision maintained.

## Claims

1. A packet ring network system in which a plurality of nodes (300) is connected by two ringlets forwarding a packet in mutually opposite directions, the packet ring network system being **characterized by** comprising:
a selecting unit (3015, 3016) exclusively switching each node of two interlink nodes connected to each other between a first connection state in which a packet is transmitted and received between one interlink node connected to the other interlink node by a first span and a first node connected by a second span, and a second connection state in which a packet is transmitted and received between the first node connected by the second span and a second node connected by a third span; and
an address entry replacing unit (3007) replacing all of the address entries of destination nodes where a packet arrives beyond an interlink node, in a topology database in which information indicating hop counts from each of the nodes to other nodes is stored, with an address of an adjacent interlink node,
wherein the selecting unit (3015, 3016) is adapted to switch the connection states of each node of the two interlink nodes connected to each other in a state that the nodes are transmitting a packet to and receiving a packet from each other using the address entries replaced by the address entry replacing unit (3007).

2. The packet ring network system of claim 1, wherein the address entry replacing unit (3007) is adapted to perform address entry replacing after stopping of packet forwarding on a span which connects nodes to each other, connection destinations of the nodes being changed by ring division or ring integration.

3. The packet ring network system of claim 1, wherein each node of the two interlink nodes connected to each other includes:
a packet multiplexing unit (3018) multiplexing a client packet supplied from the second span and addressed to the own node, and a ring packet supplied from the second span and addressed to a node other than the own node, and supplying the multiplexed packet to the first span; and
a packet selectively-outputting unit (3017) selectively outputting a packet supplied from the first span as a client packet or a ring packet.

4. The packet ring network system of claim 3, wherein the selecting unit (3015, 3016) is located in each node of the two interlink nodes connected to each other and is composed of a ring packet input unit selectively outputting any one of a ring packet supplied from the third span and a ring packet supplied from the packet selectively-outputting unit, and a ring packet output unit outputting a ring packet supplied from the second span to any one of the third span and the packet multiplexing unit (3018).

5. The packet ring network system of claim 1, wherein all or part of nodes included in the packet ring network system constitute the interlink nodes.

6. The packet ring network system of claim 1, wherein an interlink is made redundant by an interlink redundant system.

7. The packet ring network system of claim 1, wherein the packet ring network system has a plurality of rings before ring division or after ring integration.

8. A packet forwarding method applied to a packet ring network system in which a plurality of nodes (300) is connected by two ringlets forwarding a packet in mutually opposite directions, the method being **characterized by** comprising:
a selecting step of exclusively switching each node of two interlink nodes connected to each other between a first connection state in which a packet is transmitted and received between one interlink node connected to the other interlink node by a first span and a first node connected by a second span, and a second connection state in which a packet is transmitted and received between the first node connected by the second span and a second node connected by a third span; and
an address entry replacing step of replacing all of the address entries of destination nodes where a packet arrives beyond an interlink node, in a topology database in which information indicating hop counts from each of the nodes to other nodes is stored, with an address of an adjacent interlink node,
wherein the selecting step switches the connection states of each node of the two interlink nodes connected to each other in a state that the nodes are transmitting a packet to and receiving a packet from each other using the address entries replaced in the address entry replacing step.

9. The packet forwarding method of claim 8, wherein the address entry replacing step is performed after stopping of packet forwarding on a span which connects nodes to each other, connection destinations of the nodes being changed by ring division or ring integration.

10. The packet forwarding method of claim 8, wherein each node of two interlink nodes connected to each other includes:
a packet multiplexing step of multiplexing a client packet supplied from the second span and addressed to the own node, and a ring packet supplied from the second span and addressed to a node other than the own node, and supplying the multiplexed packet to the first span; and
a packet selectively-outputting step of selectively outputting a packet supplied from the first span as a client packet or a ring packet.

11. An interlink node applied in a packet ring network system in which a plurality of nodes is connected by two ringlets forwarding a packet in mutually opposite directions, the interlink node being **characterized by** comprising
a selecting unit (3015, 3016) exclusively switching between a first connection state in which a packet is transmitted and received between one interlink node connected to the other interlink node by a first span and a first node connected by a second span, and a second connection state in which a packet is transmitted and received between the first node connected by the second span and a second node connected by a third span,
wherein the selecting unit (3015, 3016) is adapted to switch the connection states in a state that the nodes are transmitting a packet to and receiving a packet from each other using address entries obtained by replacing all of the address entries of destination nodes where a packet arrives beyond the interlink node, in a topology database in which information indicating hop counts from each of the nodes to other nodes is stored, with an address of an adjacent interlink node.

12. The interlink node of claim 11, wherein the address entry replacing is performed after stopping of packet forwarding on a span which connects nodes to each other, connection destinations of the nodes being changed by ring division or ring integration.

13. The interlink node of claim 11, further comprising:
a packet multiplexing unit (3018) multiplexing a client packet supplied from the second span and addressed to the own node, and a ring packet supplied from the second span and addressed to a node other than the own node, and supplying the multiplexed packet to the first span; and
a packet selectively-outputting unit (3017) selectively outputting a packet supplied from the first span as a client packet or a ring packet.

## Patentansprüche

1. Paketringnetzwerksystem, in dem mehrere Knoten (300) durch zwei Ringlets verbunden sind, die ein Paket in wechselseitig entgegengesetzte Richtungen übertragen, wobei das Paketringnetzwerksystem **dadurch gekennzeichnet ist, dass** es aufweist:
eine Auswahleinheit (3015, 3016), die jeden Knoten zweier miteinander verbundener Interlink-Knoten exklusiv schaltet zwischen i) einem ersten Verbindungszustand, in dem ein Paket zwischen einem Interlink-Knoten, der über eine erste Span-Verbindung mit dem anderen Interlink-Knoten verbunden ist, und einem ersten Knoten, der durch eine zweite Span-Verbindung verbunden ist, übertragen und empfangen wird, und ii) einem zweiten Verbindungszustand, in dem ein Paket zwischen dem ersten Knoten, der durch die zweite Span-Verbindung verbunden ist, und einem zweiten Knoten, der durch eine dritte Span-Verbindung verbunden ist, übertragen und empfangen wird; und
eine Adresseneintragersetzungseinheit (3007), die alle Adresseneinträge von von einem Interlink-Knoten verschiedenen Zielknoten, an denen ein Paket ankommt, in einer Topologiedatenbank, in der Information, die Hop-Counts von jedem der Knoten zu anderen Knoten gespeichert ist, durch eine Adresse eines benachbarten Interlink-Knotens ersetzt,
wobei die Auswahleinheit (3015, 3016) dazu geeignet ist, die Verbindungszustände jedes Knotens der zwei miteinander verbundenen Interlink-Knoten unter Verwendung der durch die Adresseneintragersetzungseinheit (3007) ersetzten Adresseneinträge in einem Zustand zu schalten, in dem die Knoten ein Paket zueinander übertragen und voneinander empfangen.

2. System nach Anspruch 1, wobei die Adresseneintragersetzungseinheit (3007) dazu geeignet ist, eine Adresseneintragersetzung auszuführen, nachdem eine Paketübertragung über eine Span-Verbindung gestoppt wurde, die Knoten miteinander verbindet, wobei Verbindungsziele der Knoten durch eine Ringteilung oder Ringintegration geändert werden.

3. System nach Anspruch 1, wobei jeder Knoten der beiden miteinander verbundenen Interlink-Knoten aufweist:
eine Paketmultiplexeinheit (3018), die ein über die zweite Span-Verbindung zugeführtes und an den eigenen Knoten adressiertes Klient-Paket und ein über die zweite Span-Verbindung zugeführtes und an einen vom eigenen Knoten verschiedenen Knoten übertragenes Ring-Paket multiplext und das gemultiplexte Paket der ersten Span-Verbindung zuführt; und
eine Einheit (3017) zum selektiven Ausgeben eines Pakets, die ein über die erste Span-Verbindung zugeführtes Paket selektiv als ein Klient-Paket oder ein Ring-Paket ausgibt.

4. System nach Anspruch 3, wobei die Auswahleinheit (3 015, 3016) in jedem Knoten der beiden miteinander verbundenen Interlink-Knoten angeordnet ist und aus einer Ring-Paketeingabeeinheit, die ein über die dritte Span-Verbindung zugeführtes Ring-Paket oder ein von der Einheit zum selektiven Ausgeben eines Pakets zugeführtes Ring-Paket selektiv ausgibt, und einer Ring-Paketausgabeeinheit besteht, die ein über die zweite Span-Verbindung zugeführtes Ring-Paket an die dritte Span-Verbindung und die Paketmultiplexeinheit (3018) ausgibt.

5. System nach Anspruch 1, wobei alle oder ein Teil der im Paketringnetzwerksystem enthaltenen Knoten die Interlink-Knoten bilden.

6. System nach Anspruch 1, wobei eine Interlink-Verbindung durch ein Interlink-Redundanzsystem redundant gemacht wird.

7. System nach Anspruch 1, wobei das Paketringnetzwerksystem vor einer Ringteilung oder nach einer Ringintegration mehrere Ringe aufweist.

8. Paketübertragungsverfahren, das auf ein Paketringnetzwerksystem angewendet wird, in dem mehrere Knoten (300) durch zwei Ringlets verbunden sind, die ein Paket in wechselseitig entgegengesetzte Richtungen übertragen, wobei das Verfahren **gekennzeichnet ist durch**:
einen Auswahlschritt zum exklusiven Schalten jedes Knotens zweier miteinander verbundener Interlink-Knoten zwischen i) einem ersten Verbindungszustand, in dem ein Paket zwischen einem Interlink-Knoten, der über eine erste Span-Verbindung mit dem anderen Interlink-Knoten verbunden ist, und einem ersten Knoten, der **durch** eine zweite Span-Verbindung verbunden ist, übertragen und empfangen wird, und ii) einem zweiten Verbindungszustand, in dem ein Paket zwischen dem ersten Knoten, der **durch** die zweite Span-Verbindung verbunden ist, und einem zweiten Knoten, der **durch** eine dritte Span-Verbindung verbunden ist, übertragen und empfangen wird; und
einen Adresseneintragersetzungsschritt zum Ersetzen aller Adresseneinträge von von einem Interlink-Knoten verschiedenen Zielknoten, an denen ein Paket ankommt, in einer Topologiedatenbank, in der Information, die Hop-Counts von jedem der Knoten zu anderen Knoten gespeichert ist, **durch** eine Adresse eines benachbarten Interlink-Krnotens,
wobei im Auswahlschritt die Verbindungszustände jedes Knotens der zwei miteinander verbundenen Interlink-Knoten unter Verwendung der im Adresseneintragersetzungsschritt ersetzten Adresseneinträge in einem Zustand geschaltet werden, in dem die Knoten ein Paket zueinander übertragen und voneinander empfangen.

9. Verfahren nach Anspruch 8, wobei der Adresseneintragersetzungsschritt ausgeführt wird, nachdem eine Paketübertragung über eine Span-Verbindung gestoppt wurde, die Knoten miteinander verbindet, wobei Verbindungsziele der Knoten durch eine Ringteilung oder Ringintegration geändert werden.

10. Verfahren nach Anspruch 8, wobei jeder Knoten der beiden miteinander verbundenen Interlink-Knoten aufweist:
einen Paketmultiplexschritt zum Multiplexen eines über die zweite Span-Verbindung zugeführten und an den eigenen Knoten adressierten Klient-Pakets und eines über die zweite Span-Verbindung zugeführten und an einen vom eigenen Knoten verschiedenen Knoten übertragenen Ring-Pakets und zum Zuführen des gemultiplexten Pakets zur ersten Span-Verbindung; und
einen Schritt zum selektiven Ausgeben eines Pakets, in dem ein über die erste Span-Verbindung zugeführtes Paket als ein Klient-Paket oder ein Ring-Paket selektiv ausgegeben wird.

11. Interlink-Knoten, der in einem Paketringnetzwerksystem verwendet wird, in dem mehrere Knoten durch zwei Ringlets verbunden sind, die ein Paket in wechselseitig entgegengesetzte Richtungen übertragen, wobei der Interlink-Knoten **dadurch gekennzeichnet ist, dass** er aufweist:
eine Auswahleinheit (3015, 3016), die exklusiv schaltet zwischen i) einem ersten Verbindungszustand, in dem ein Paket zwischen einem Interlink-Knoten, der über eine erste Span-Verbindung mit dem anderen Interlink-Knoten verbunden ist, und einem ersten Knoten, der durch eine zweite Span-Verbindung verbunden ist, übertragen und empfangen wird, und ii) einem zweiten Verbindungszustand, in dem ein Paket zwischen dem ersten Knoten, der durch die zweite Span-Verbindung verbunden ist, und einem zweiten Knoten, der durch eine dritte Span-Verbindung verbunden ist, übertragen und empfangen wird,
wobei die Auswahleinheit (3015, 3016) dazu geeignet ist, die Verbindungszustände in einem Zustand, in dem die Knoten ein Paket zueinander übertragen und voneinander empfangen, unter Verwendung von Adresseneinträgen zu schalten, die durch Ersetzen aller Adresseneinträge von von einem Interlink-Knoten verschiedenen Zielknoten, an denen ein Paket ankommt, in einer Topologiedatenbank, in der Information, die Hop-Counts von jedem der Knoten zu anderen Knoten gespeichert ist, durch eine Adresse eines benachbarten Interlink-Knotens erhalten werden.

12. Interlink-Knoten nach Anspruch 11, wobei die Adresseneintragersetzung ausgeführt wird, nachdem eine Paketübertragung über eine Span-Verbindung gestoppt wurde, die Knoten miteinander verbindet, wobei Verbindungsziele der Knoten durch eine Ringteilung oder Ringintegration geändert werden.

13. Interlink-Knoten nach Anspruch 11, ferner mit:
einer Paketmultiplexeinheit (3018), die ein über die zweite Span-Verbindung zugeführtes und an den eigenen Knoten adressiertes Klient-Paket und ein über die zweite Span-Verbindung zugeführtes und an einen vom eigenen Knoten verschiedenen Knoten übertragenes Ring-Paket multiplext und das gemultiplexte Paket der ersten Span-Verbindung zuführt; und
einer Einheit (3017) zum selektiven Ausgeben eines Pakets, die ein über die erste Span-Verbindung zugeführtes Paket als ein Klient-Paket oder ein Ring-Paket selektiv ausgibt.

## Revendications

1. Système de réseau en anneau pour paquets, où plusieurs noeuds (300) sont reliés par deux anneaux acheminant un paquet dans des directions opposées l'une à l'autre, ledit système de réseau en anneau pour paquets comprenant :
une unité de sélection (3015, 3016) commutant exclusivement chaque noeud de deux noeuds d'interconnexion reliés l'un à l'autre, entre un premier état de connexion où un paquet est transmis et reçu entre un noeud d'interconnexion relié à l'autre noeud d'interconnexion par un premier trajet, et un premier noeud relié par un deuxième trajet, et un deuxième état de connexion où un paquet est transmis et reçu entre le premier noeud relié par le deuxième trajet, et un deuxième noeud relié par un troisième trajet ; et
une unité de substitution d'entrée d'adresse (3007) substituant une adresse d'un noeud d'interconnexion adjacent à toutes les entrées d'adresse des noeuds de destination qu'atteint un paquet au-delà d'un noeud d'interconnexion, dans une base de données topologiques où sont stockées des informations relatives au nombre de sauts de chaque noeud vers d'autres noeuds,
l'unité de sélection (3015, 3016) étant prévue pour commuter les états de connexion de chaque noeud de deux noeuds d'interconnexion reliés l'un à l'autre vers un état où les noeuds transmettent un paquet l'un vers l'autre, et reçoivent un paquet l'un de l'autre en exploitant les entrées d'adresse substituées par l'unité de substitution d'entrée d'adresse (3007).

2. Système de réseau en anneau pour paquets selon la revendication 1, où l'unité de substitution d'entrée d'adresse (3007) est prévue pour exécuter la substitution d'entrée d'adresse après arrêt d'acheminement du paquet sur un trajet reliant les noeuds l'un à l'autre, les destinations de connexion des noeuds étant modifiées par division d'anneau ou intégration d'anneau.

3. Système de réseau en anneau pour paquets selon la revendication 1, où chaque noeud des deux noeuds d'interconnexion reliés l'un à l'autre comporte :
une unité de multiplexage de paquet (3018) multiplexant un paquet client provenant du deuxième trajet et adressé au noeud propre, et un paquet d'anneau provenant du deuxième trajet et adressé à un noeud autre que le noeud propre, et délivrant le paquet multi-plexé au premier trajet ; et
une unité de sortie sélective de paquet (3017) sortant sélectivement un paquet provenant du premier trajet en tant que paquet client ou paquet d'anneau.

4. Système de réseau en anneau pour paquets selon la revendication 3, où l'unité de sélection (3015, 3016) est disposée dans chaque noeud des deux noeuds d'interconnexion reliés l'un à l'autre et est composée d'une unité d'entrée de paquet d'anneau sortant sélectivement soit un paquet d'anneau provenant du troisième trajet soit un paquet d'anneau provenant de l'unité de sortie sélective de paquet, et d'une unité de sortie de paquet d'anneau sortant un paquet d'anneau provenant du deuxième trajet vers le troisième trajet ou l'unité de multiplexage de paquet (3018).

5. Système de réseau en anneau pour paquets selon la revendication 1, où tout ou partie des noeuds compris dans le système de réseau en anneau pour paquets constituent les noeuds d'interconnexion.

6. Système de réseau en anneau pour paquets selon la revendication 1, où une interconnexion est rendue redondante par un système d'interconnexion redondant.

7. Système de réseau en anneau pour paquets selon la revendication 1, où ledit système de réseau en anneau pour paquets comprend une pluralité d'anneaux avant division d'anneau ou après intégration d'anneau.

8. Procédé d'acheminement de paquets appliqué à un système de réseau en anneau pour paquets où une pluralité de noeuds (300) sont reliés par deux anneaux acheminant un paquet dans des directions opposées l'une à l'autre, ledit procédé comprenant :
une étape de sélection où est exclusivement commuté chaque noeud de deux noeuds d'interconnexion reliés l'un à l'autre, entre un premier état de connexion où un paquet est transmis et reçu entre un noeud d'interconnexion relié à l'autre noeud d'interconnexion par un premier trajet, et un premier noeud relié par un deuxième trajet, et un deuxième état de connexion où un paquet est transmis et reçu entre le premier noeud relié par le deuxième trajet, et un deuxième noeud relié par un troisième trajet ; et
une étape de substitution d'entrée d'adresse, où une adresse d'un noeud d'interconnexion adjacent est substituée à toutes les entrées d'adresse des noeuds de destination qu'atteint un paquet au-delà d'un noeud d'interconnexion, dans une base de données topologiques où sont stockées des informations relatives au nombre de sauts de chaque noeud vers d'autres noeuds,
l'étape de sélection commutant les états de connexion de chaque noeud de deux noeuds d'interconnexion reliés l'un à l'autre vers un état où les noeuds transmettent un paquet l'un vers l'autre, et reçoivent un paquet l'un de l'autre en exploitant les entrées d'adresse substituées lors de l'étape de substitution d'entrée d'adresse.

9. Procédé d'acheminement de paquets selon la revendication 8, où l'étape de substitution d'entrée d'adresse est exécutée après arrêt d'acheminement du paquet sur un trajet reliant les noeuds l'un à l'autre, les destinations de connexion des noeuds étant modifiées par division d'anneau ou intégration d'anneau.

10. Procédé d'acheminement de paquets selon la revendication 8, où chaque noeud de deux noeuds d'interconnexion reliés l'un à l'autre comporte :
une étape de multiplexage de paquet, où est multiplexé un paquet client provenant du deuxième trajet et adressé au noeud propre, et un paquet d'anneau provenant du deuxième trajet et adressé à un noeud autre que le noeud propre, et délivrant le paquet multi-plexé au premier trajet ; et
une étape de sortie sélective de paquet, où est sorti sélectivement un paquet provenant du premier trajet en tant que paquet client ou paquet d'anneau.

11. Noeud d'interconnexion appliqué dans un système de réseau en anneau pour paquets où une pluralité de noeuds sont reliés par deux anneaux acheminant un paquet dans des directions opposées l'une à l'autre, ledit noeud d'interconnexion comprenant :
une unité de sélection (3015, 3016) commutant exclusivement entre un premier état de connexion où un paquet est transmis et reçu entre un noeud d'interconnexion relié à l'autre noeud d'interconnexion par un premier trajet, et un premier noeud relié par un deuxième trajet, et un deuxième état de connexion où un paquet est transmis et reçu entre le premier noeud relié par le deuxième trajet, et un deuxième noeud relié par un troisième trajet,
l'unité de sélection (3015, 3016) étant prévue pour commuter les états de connexion vers un état où les noeuds transmettent un paquet l'un vers l'autre, et reçoivent un paquet l'un de l'autre en exploitant les entrées d'adresse obtenues par substitution d'une adresse d'un noeud d'interconnexion adjacent à toutes les entrées d'adresse des noeuds de destination qu'atteint un paquet au-delà du noeud d'interconnexion, dans une base de données topologiques où sont stockées des informations relatives au nombre de sauts de chaque noeud vers d'autres noeuds.

12. Noeud d'interconnexion selon la revendication 11, où la substitution d'entrée d'adresse est exécutée après arrêt d'acheminement du paquet sur un trajet reliant les noeuds l'un à l'autre, les destinations de connexion des noeuds étant modifiées par division d'anneau ou intégration d'anneau.

13. Noeud d'interconnexion selon la revendication 11, comprenant en outre :
une unité de multiplexage de paquet (3018) multiplexant un paquet client provenant du deuxième trajet et adressé au noeud propre, et un paquet d'anneau provenant du deuxième trajet et adressé à un noeud autre que le noeud propre, et délivrant le paquet multi-plexé au premier trajet ; et
une unité de sortie sélective de paquet (3017) sortant sélectivement un paquet provenant du premier trajet en tant que paquet client ou paquet d'anneau.
